# EUROPEAN PATENT APPLICATION

(11) **EP 4 501 776 A1**
(43) Date of publication of application: **05.02.2025**
(21) Application number: 23780043.8
(22) Date of filing: 23.03.2023
(51) Int. Cl.: B63H 21/22, B63H 25/02

(54) **REMOTE SHIP STEERING SYSTEM, SHIP CONTROL DEVICE, INPUT DEVICE, REMOTE SHIP STEERING METHOD, AND PROGRAM**

(30) Priority: 30.03.2022 JP 2022055371
(71) Applicant: NHK Spring Co., Ltd., Yokohama-shi, Kanagawa 236-0004 (JP)
(72) Inventor: TOKUSHIGE, Jun, Yokohama-shi, Kanagawa 236-0004 (JP); TSUDA, Yuto, Yokohama-shi, Kanagawa 236-0004 (JP); SATO Marino, Yokohama-shi, Kanagawa 236-0004 (JP)
(74) Representative: V.O.
(86) International application number: PCT/JP2023/011502
(87) International publication number: WO 2023/190032

(57) **Abstract**

A remote watercraft maneuvering system includes a watercraft and an input device. The watercraft includes an actuator having a function of generating a propulsion force of the watercraft and a function of causing the watercraft to generate a moment, a manipulation unit, a watercraft control device, a watercraft position detection unit, and a communication unit. The input device includes a communication unit, an input device position detection unit, a manipulation unit, and a notification unit. The watercraft control device has a normal watercraft maneuvering mode and a remote watercraft maneuvering mode. In the remote watercraft maneuvering mode, the communication unit of the watercraft receives information indicating the position of the input device from the input device, the watercraft control device calculates a distance between the input device and the watercraft, and the communication unit of the watercraft transmits information indicating that the distance between the input device and the watercraft is greater than or equal to a threshold value to the input device and the notification unit provides a notification for a remote watercraft maneuverer using the input device when the distance between the input device and the watercraft is greater than or equal to the threshold value. The threshold value is smaller than a maximum value of the distance between the input device and the watercraft when communication between the communication unit of the input device and the communication unit of the watercraft is possible.

## Description

### Technical Field

The present invention relates to a remote watercraft maneuvering system, a watercraft control device, an input device, a remote watercraft maneuvering method, and a program.

### Background Art

As described in Non-Patent Document 1, drones have a "return to home (RTH)" function of automatically returning to a home point recorded in advance by a Global Positioning System (GPS) device when communication between a drone body and a transmitter is interrupted or the like. In the technology described in Non-Patent Document 1, when communication between the drone body and the transmitter is interrupted, when a battery level is low, and when a watercraft maneuverer manually presses an RTH button, the RTH function is automatically activated. The RTH function, which is automatically activated when communication between the drone body and the transmitter is interrupted, is referred to as failsafe RTH.

### Citation List

### Non-Patent Document

Non-Patent Document 1
Asahi Technology Co., Ltd., "What is Return to Home? Basic knowledge for safe return in challenging or emergency situations," [online], May 29, 2019 [retrieved on March 11, 2022], Internet <URL: https://atcl-dsj.com/useful/4873/>

### Summary of Invention

### Technical Problem

When a watercraft is remotely manipulated, a failsafe function is required as in the case where a drone is remotely manipulated. If a failsafe function similar to the failsafe function of a drone is applied to the remote manipulation for the watercraft, when communication between the watercraft and an input device (a transmitter) is interrupted, the watercraft will automatically return to a home point recorded by a GPS device in advance.

On the other hand, the remote manipulation for the watercraft may be performed when there are obstacles or the like around the watercraft. In this case, it can be said that it is preferable to continue remote watercraft maneuvering than to allow the watercraft to sail automatically.

In view of the above, an objective of the present invention is to provide a remote watercraft maneuvering system, a watercraft control device, an input device, a remote watercraft maneuvering method, and a program that can allow a remote watercraft maneuverer to ascertain in advance that there is a potential risk of disabled remote watercraft maneuvering.

### Solution to Problem

According to an aspect of the present invention, there is provided a remote watercraft maneuvering system including a watercraft and an input device configured to receive an input manipulation for remotely manipulating the watercraft, wherein the watercraft includes an actuator having a function of generating a propulsion force of the watercraft and a function of causing the watercraft to generate a moment; a manipulation unit of the watercraft configured to receive an input manipulation for operating the actuator; a watercraft control device having a function of operating the actuator in accordance with an input manipulation received by the manipulation unit of the watercraft; a watercraft position detection unit configured to detect a position of the watercraft; and a communication unit of the watercraft configured to communicate with the input device, wherein the input device includes a communication unit of the input device configured to communicate with the watercraft; an input device position detection unit configured to detect a position of the input device; a manipulation unit of the input device configured to receive an input manipulation for operating the actuator; and a notification unit configured to provide a notification for a remote watercraft maneuverer using the input device, wherein the watercraft control device has a normal watercraft maneuvering mode in which the actuator is operated in accordance with the input manipulation received by the manipulation unit of the watercraft; and a remote watercraft maneuvering mode in which the manipulation unit of the watercraft does not need to receive the input manipulation and the actuator is operated in accordance with the input manipulation received by the manipulation unit of the input device, wherein, in the remote watercraft maneuvering mode, the communication unit of the watercraft receives information indicating the position of the input device detected by the input device position detection unit from the input device, the watercraft control device calculates a distance between the input device and the watercraft on the basis of the position of the input device detected by the input device position detection unit and the position of the watercraft detected by the watercraft position detection unit, and the communication unit of the watercraft transmits information indicating that the distance between the input device and the watercraft is greater than or equal to a threshold value to the input device and the notification unit provides a notification for a remote watercraft maneuverer using the input device when the distance between the input device and the watercraft is greater than or equal to the threshold value, and wherein the threshold value is smaller than a maximum value of the distance between the input device and the watercraft when communication between the communication unit of the input device and the communication unit of the watercraft is possible.

According to an aspect of the present invention, there is provided a watercraft control device provided in a watercraft to be remotely manipulated according to an input manipulation received by an input device, wherein the watercraft includes an actuator having a function of generating a propulsion force of the watercraft and a function of causing the watercraft to generate a moment; a manipulation unit of the watercraft configured to receive an input manipulation for operating the actuator; a watercraft position detection unit configured to detect a position of the watercraft; and a communication unit of the watercraft configured to communicate with the input device, wherein the watercraft control device has a function of operating the actuator in accordance with an input manipulation received by the manipulation unit of the watercraft, wherein the input device includes a communication unit of the input device configured to communicate with the watercraft; an input device position detection unit configured to detect a position of the input device; a manipulation unit of the input device configured to receive an input manipulation for operating the actuator; and a notification unit configured to provide a notification for a remote watercraft maneuverer using the input device, wherein the watercraft control device has a normal watercraft maneuvering mode in which the actuator is operated in accordance with the input manipulation received by the manipulation unit of the watercraft; and a remote watercraft maneuvering mode in which the manipulation unit of the watercraft does not need to receive the input manipulation and the actuator is operated in accordance with the input manipulation received by the manipulation unit of the input device, wherein, in the remote watercraft maneuvering mode, the communication unit of the watercraft receives information indicating the position of the input device detected by the input device position detection unit from the input device, the watercraft control device calculates a distance between the input device and the watercraft on the basis of the position of the input device detected by the input device position detection unit and the position of the watercraft detected by the watercraft position detection unit, and the communication unit of the watercraft transmits information indicating that the distance between the input device and the watercraft is greater than or equal to a threshold value to the input device and the notification unit provides a notification for a remote watercraft maneuverer using the input device when the distance between the input device and the watercraft is greater than or equal to the threshold value, and wherein the threshold value is smaller than a maximum value of the distance between the input device and the watercraft when communication between the communication unit of the input device and the communication unit of the watercraft is possible.

According to an aspect of the present invention, there is provided a remote watercraft maneuvering method of remotely manipulating a watercraft according to an input manipulation received by an input device, wherein the watercraft includes an actuator having a function of generating a propulsion force of the watercraft and a function of causing the watercraft to generate a moment; a manipulation unit of the watercraft configured to receive an input manipulation for operating the actuator; a watercraft control device having a function of operating the actuator in accordance with an input manipulation received by the manipulation unit of the watercraft; a watercraft position detection unit configured to detect a position of the watercraft; and a communication unit of the watercraft configured to communicate with the input device, wherein the input device includes a communication unit of the input device configured to communicate with the watercraft; an input device position detection unit configured to detect a position of the input device; a manipulation unit of the input device configured to receive an input manipulation for operating the actuator; and a notification unit configured to provide a notification for a remote watercraft maneuverer using the input device, wherein the watercraft control device has a normal watercraft maneuvering mode in which the actuator is operated in accordance with the input manipulation received by the manipulation unit of the watercraft; and a remote watercraft maneuvering mode in which the manipulation unit of the watercraft does not need to receive the input manipulation and the actuator is operated in accordance with the input manipulation received by the manipulation unit of the input device, wherein the remote watercraft maneuvering method includes a first step in which the communication unit of the watercraft receives information indicating the position of the input device detected by the input device position detection unit from the input device in the remote watercraft maneuvering mode; a second step in which the watercraft control device calculates a distance between the input device and the watercraft on the basis of the position of the input device detected by the input device position detection unit and the position of the watercraft detected by the watercraft position detection unit in the remote watercraft maneuvering mode; and a third step in which the communication unit of the watercraft transmits information indicating that the distance between the input device and the watercraft is greater than or equal to a threshold value to the input device and the notification unit provides a notification for a remote watercraft maneuverer using the input device when the distance between the input device and the watercraft is greater than or equal to the threshold value in the remote watercraft maneuvering mode, and wherein the threshold value is smaller than a maximum value of the distance between the input device and the watercraft when communication between the communication unit of the input device and the communication unit of the watercraft is possible.

According to an aspect of the present invention, there is provided a program for causing a computer constituting a watercraft control device provided in a watercraft to be remotely manipulated according to an input manipulation received by an input device to execute a normal watercraft maneuvering step and a remote watercraft maneuvering step, wherein the watercraft includes an actuator having a function of generating a propulsion force of the watercraft and a function of causing the watercraft to generate a moment; a manipulation unit of the watercraft configured to receive an input manipulation for operating the actuator; a watercraft position detection unit configured to detect a position of the watercraft; and a communication unit of the watercraft configured to communicate with the input device, wherein the input device includes a communication unit of the input device configured to communicate with the watercraft; an input device position detection unit configured to detect a position of the input device; a manipulation unit of the input device configured to receive an input manipulation for operating the actuator; and a notification unit configured to provide a notification for a remote watercraft maneuverer using the input device, wherein the actuator is operated in accordance with the input manipulation received by the manipulation unit of the watercraft in the normal watercraft maneuvering step, wherein the manipulation unit of the watercraft does not need to receive the input manipulation and the actuator is operated in accordance with the input manipulation received by the manipulation unit of the input device in the remote watercraft maneuvering step, wherein the remote watercraft maneuvering step includes a distance calculation step in which a distance between the input device and the watercraft is calculated on the basis of the position of the input device detected by the input device position detection unit and the position of the watercraft detected by the watercraft position detection unit, wherein, while the remote watercraft maneuvering step is being executed, the communication unit of the watercraft receives information indicating the position of the input device detected by the input device position detection unit from the input device, and the communication unit of the watercraft transmits information indicating that the distance between the input device and the watercraft is greater than or equal to a threshold value to the input device and the notification unit provides a notification for a remote watercraft maneuverer using the input device when the distance between the input device and the watercraft is greater than or equal to the threshold value, and wherein the threshold value is smaller than a maximum value of the distance between the input device and the watercraft when communication between the communication unit of the input device and the communication unit of the watercraft is possible.

According to an aspect of the present invention, there is provided a remote watercraft maneuvering system including a watercraft and an input device configured to receive an input manipulation for remotely manipulating the watercraft, wherein the watercraft includes an actuator having a function of generating a propulsion force of the watercraft and a function of causing the watercraft to generate a moment; a manipulation unit of the watercraft configured to receive an input manipulation for operating the actuator; a watercraft control device having a function of operating the actuator in accordance with an input manipulation received by the manipulation unit of the watercraft; a watercraft position detection unit configured to detect a position of the watercraft; and a communication unit of the watercraft configured to communicate with the input device, wherein the input device includes a communication unit of the input device configured to communicate with the watercraft; an input device position detection unit configured to detect a position of the input device; a manipulation unit of the input device configured to receive an input manipulation for operating the actuator; a notification unit configured to provide a notification for a remote watercraft maneuverer using the input device; and a processing unit, wherein the watercraft control device has a normal watercraft maneuvering mode in which the actuator is operated in accordance with the input manipulation received by the manipulation unit of the watercraft; and a remote watercraft maneuvering mode in which the manipulation unit of the watercraft does not need to receive the input manipulation and the actuator is operated in accordance with the input manipulation received by the manipulation unit of the input device, wherein, in the remote watercraft maneuvering mode, the communication unit of the input device receives information indicating the position of the watercraft detected by the watercraft position detection unit from the watercraft, the processing unit calculates a distance between the input device and the watercraft on the basis of the position of the input device detected by the input device position detection unit and the position of the watercraft detected by the watercraft position detection unit, and the notification unit provides a notification for a remote watercraft maneuverer using the input device when the distance between the input device and the watercraft is greater than or equal to a threshold value, and wherein the threshold value is smaller than a maximum value of the distance between the input device and the watercraft when communication between the communication unit of the input device and the communication unit of the watercraft is possible.

According to an aspect of the present invention, there is provided an input device for receiving an input manipulation for remotely manipulating a watercraft, wherein the watercraft includes an actuator having a function of generating a propulsion force of the watercraft and a function of causing the watercraft to generate a moment; a manipulation unit of the watercraft configured to receive an input manipulation for operating the actuator; a watercraft control device having a function of operating the actuator in accordance with an input manipulation received by the manipulation unit of the watercraft; a watercraft position detection unit configured to detect a position of the watercraft; and a communication unit of the watercraft configured to communicate with the input device, wherein the input device includes a communication unit of the input device configured to communicate with the watercraft; an input device position detection unit configured to detect a position of the input device; a manipulation unit of the input device configured to receive an input manipulation for operating the actuator; a notification unit configured to provide a notification for a remote watercraft maneuverer using the input device; and a processing unit, wherein the watercraft control device has a normal watercraft maneuvering mode in which the actuator is operated in accordance with the input manipulation received by the manipulation unit of the watercraft; and a remote watercraft maneuvering mode in which the manipulation unit of the watercraft does not need to receive the input manipulation and the actuator is operated in accordance with the input manipulation received by the manipulation unit of the input device, wherein, in the remote watercraft maneuvering mode, the communication unit of the input device receives information indicating the position of the watercraft detected by the watercraft position detection unit from the watercraft, the processing unit calculates a distance between the input device and the watercraft on the basis of the position of the input device detected by the input device position detection unit and the position of the watercraft detected by the watercraft position detection unit, and the notification unit provides a notification for a remote watercraft maneuverer using the input device when the distance between the input device and the watercraft is greater than or equal to a threshold value, and wherein the threshold value is smaller than a maximum value of the distance between the input device and the watercraft when communication between the communication unit of the input device and the communication unit of the watercraft is possible.

According to an aspect of the present invention, there is provided a remote watercraft maneuvering method of remotely manipulating a watercraft according to an input manipulation received by an input device, wherein the watercraft includes an actuator having a function of generating a propulsion force of the watercraft and a function of causing the watercraft to generate a moment; a manipulation unit of the watercraft configured to receive an input manipulation for operating the actuator; a watercraft control device having a function of operating the actuator in accordance with an input manipulation received by the manipulation unit of the watercraft; a watercraft position detection unit configured to detect a position of the watercraft; and a communication unit of the watercraft configured to communicate with the input device, wherein the input device includes a communication unit of the input device configured to communicate with the watercraft; an input device position detection unit configured to detect a position of the input device; a manipulation unit of the input device configured to receive an input manipulation for operating the actuator; a notification unit configured to provide a notification for a remote watercraft maneuverer using the input device; and a processing unit, wherein the watercraft control device has a normal watercraft maneuvering mode in which the actuator is operated in accordance with the input manipulation received by the manipulation unit of the watercraft; and a remote watercraft maneuvering mode in which the manipulation unit of the watercraft does not need to receive the input manipulation and the actuator is operated in accordance with the input manipulation received by the manipulation unit of the input device, wherein the remote watercraft maneuvering method includes a first step in which the communication unit of the input device receives information indicating the position of the watercraft detected by the watercraft position detection unit from the watercraft in the remote watercraft maneuvering mode; a second step in which the processing unit calculates a distance between the input device and the watercraft on the basis of the position of the input device detected by the input device position detection unit and the position of the watercraft detected by the watercraft position detection unit in the remote watercraft maneuvering mode, and a third step in which the notification unit provides a notification for a remote watercraft maneuverer using the input device when the distance between the input device and the watercraft is greater than or equal to a threshold value in the remote watercraft maneuvering mode, and wherein the threshold value is smaller than a maximum value of the distance between the input device and the watercraft when communication between the communication unit of the input device and the communication unit of the watercraft is possible.

According to an aspect of the present invention, there is provided a program for causing a computer constituting an input device for receiving an input manipulation for remotely manipulating a watercraft to execute a remote watercraft maneuvering step, wherein the watercraft includes an actuator having a function of generating a propulsion force of the watercraft and a function of causing the watercraft to generate a moment; a manipulation unit of the watercraft configured to receive an input manipulation for operating the actuator; a watercraft control device having a function of operating the actuator in accordance with an input manipulation received by the manipulation unit of the watercraft; a watercraft position detection unit configured to detect a position of the watercraft; and a communication unit of the watercraft configured to communicate with the input device, wherein the input device includes a communication unit of the input device configured to communicate with the watercraft; an input device position detection unit configured to detect a position of the input device; a manipulation unit of the input device configured to receive an input manipulation for operating the actuator; a notification unit configured to provide a notification for a remote watercraft maneuverer using the input device; and a processing unit, wherein the watercraft control device has a normal watercraft maneuvering mode in which the actuator is operated in accordance with the input manipulation received by the manipulation unit of the watercraft; and a remote watercraft maneuvering mode in which the manipulation unit of the watercraft does not need to receive the input manipulation and the actuator is operated in accordance with the input manipulation received by the manipulation unit of the input device, wherein the remote watercraft maneuvering step is executed in the remote watercraft maneuvering mode, wherein the remote watercraft maneuvering step includes a first step in which the communication unit of the input device receives information indicating the position of the watercraft detected by the watercraft position detection unit from the watercraft; a second step in which the processing unit calculates a distance between the input device and the watercraft on the basis of the position of the input device detected by the input device position detection unit and the position of the watercraft detected by the watercraft position detection unit, and a third step in which the notification unit provides a notification for a remote watercraft maneuverer using the input device when the distance between the input device and the watercraft is greater than or equal to a threshold value, and wherein the threshold value is smaller than a maximum value of the distance between the input device and the watercraft when communication between the communication unit of the input device and the communication unit of the watercraft is possible.

### Advantageous Effects of Invention

According to the present invention, it is possible to provide a remote watercraft maneuvering system, a watercraft control device, an input device, a remote watercraft maneuvering method, and a program that can allow a remote watercraft maneuverer to ascertain in advance that there is a potential risk of disabled remote watercraft maneuvering.

### Brief Description of Drawings

FIG. 1 is a diagram showing an example of a remote watercraft maneuvering system 1 of a first embodiment.
FIG. 2 is an explanatory diagram showing an example of a process executed in a remote watercraft maneuvering mode of a watercraft control device 113 of the first embodiment.
FIG. 3 is a sequence diagram for describing an example of a process executed in a remote watercraft maneuvering system 1 of the first embodiment in the remote watercraft maneuvering mode of the watercraft control device 113.
FIG. 4 is a diagram showing an example of a remote watercraft maneuvering system 1 of a second embodiment.
FIG. 5 is a sequence diagram for describing an example of a process executed in the remote watercraft maneuvering system 1 of the second embodiment in a remote watercraft maneuvering mode of a watercraft control device 113.
FIG. 6 is an explanatory diagram showing an example of a process executed in a remote watercraft maneuvering mode of a watercraft control device 113 of a third embodiment.
FIG. 7 is a sequence diagram for describing an example of a process executed in a remote watercraft maneuvering system 1 of the third embodiment in the remote watercraft maneuvering mode of the watercraft control device 113 or the like.
FIG. 8 is a sequence diagram for describing an example of a process executed in a remote watercraft maneuvering system 1 of a fourth embodiment in a remote watercraft maneuvering mode of a watercraft control device 113 or the like.
FIG. 9 is a sequence diagram for describing an example of a process executed in a remote watercraft maneuvering system 1 of a seventh embodiment in a remote watercraft maneuvering mode of a watercraft control device 113 or the like.
FIG. 10 is a sequence diagram for describing an example of a process executed in a remote watercraft maneuvering system 1 of an eighth embodiment in a remote watercraft maneuvering mode of a watercraft control device 113 or the like.
FIG. 11 is a sequence diagram for describing a first example of a process executed in a remote watercraft maneuvering system 1 of a ninth embodiment in a remote watercraft maneuvering mode of a watercraft control device 113 or the like.
FIG. 12 is an explanatory diagram showing a second example of a process executed in the remote watercraft maneuvering system 1 of the ninth embodiment in an orientation holding mode of the watercraft control device 113.
FIG. 13 is a sequence diagram for describing a first example of a process executed in a remote watercraft maneuvering system 1 of a tenth embodiment in a remote watercraft maneuvering mode of a watercraft control device 113 or the like.

### Description of Embodiments

### <First Embodiment>

Hereinafter, a first embodiment of a remote watercraft maneuvering system, a watercraft control device, an input device, a remote watercraft maneuvering method, and a program of the present invention will be described.

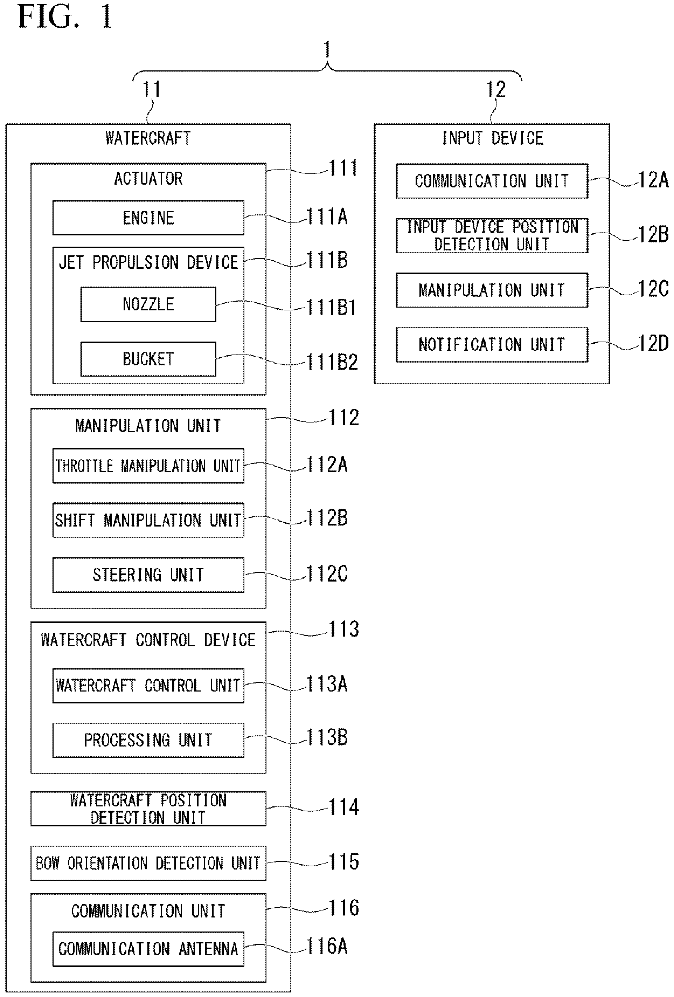

FIG. 1 is a diagram showing an example of a remote watercraft maneuvering system 1 of the first embodiment.

In the example shown in FIG. 1, the remote watercraft maneuvering system 1 of the first embodiment includes a watercraft 11 and an input device 12. For example, the watercraft 11 is a personal watercraft (PWC) having a function similar to a basic function of a personal watercraft (PWC or a water motorcycle) described in FIG. 1 of Japanese Unexamined Patent Application, First Publication No. 2003-237693, FIG. 1 of Japanese Unexamined Patent Application, First Publication No. 2014-073790, and the like. The watercraft 11 includes, for example, an actuator 111, a manipulation unit 112, a watercraft control device 113, a watercraft position detection unit 114, a bow orientation detection unit 115, and a communication unit 116.

The actuator 111 has a function of generating a propulsion force of the watercraft 11 and a function of causing the watercraft 11 to generate a moment. Specifically, the actuator 111 includes an engine 111A and a jet propulsion device 111B. The engine 111A outputs a driving force. The engine 111A is configured, for example, like an engine described in FIG. 1 of Japanese Unexamined Patent Application, First Publication No. 2014-073790 and the like. The jet propulsion device 111B generates the propulsion force of the watercraft 11 according to the driving force output from the engine 111A. The jet propulsion device 111B is configured, for example, like a jet propulsion device described in FIG. 1 of Japanese Unexamined Patent Application, First Publication No. 2003-237693 and the like. The jet propulsion device 111B includes a nozzle 111B1 and a bucket 111B2. The nozzle 111B1 ejects a jet stream generated by the driving force output from the engine 111A. The nozzle 111B1 is configured, for example, like a nozzle described in FIG. 1 of Japanese Unexamined Patent Application, First Publication No. 2003-237693 and the like. The bucket 111B2 changes a direction of the jet stream ejected from the nozzle 111B1. The bucket 111B2 is configured, for example, like a bucket described in FIG. 1 of Japanese Unexamined Patent Application, First Publication No. 2003-237693 and the like.

The manipulation unit 112 receives an input manipulation of a watercraft maneuverer who operates the actuator 111.

The manipulation unit 112 includes a throttle manipulation unit 112A, a shift manipulation unit 112B, and a steering unit 112C.

The throttle manipulation unit 112A is configured, for example, like a throttle manipulation unit described in Japanese Unexamined Patent Application, First Publication No. 2014-073790, and receives an input manipulation of the watercraft maneuverer for adjusting a rotational speed of the engine 111A. The shift manipulation unit 112B is configured, for example, like a shift manipulation unit described in Japanese Unexamined Patent Application, First Publication No. 2014-073790, and receives an input manipulation of the watercraft maneuverer for switching the position of the bucket 111B2 among a forward movement position, a neutral position, and a rearward movement position. When the steering unit 112C receives the input manipulation of the watercraft maneuverer, the actuator 111 causes the watercraft 11 to generate a moment. The steering unit 112C and the throttle manipulation unit 112A are configured, for example, like a steering handle device described in FIG. 1 of Japanese Patent No. 5196649, a steering unit described in FIG. 1 of Japanese Unexamined Patent Application, First Publication No. 2019-171925, and the like.

The watercraft control device 113 includes a watercraft control unit 113A and a processing unit 113B. The watercraft control unit 113A has a function of operating the actuator 111 in accordance with an input manipulation of the watercraft maneuverer received by the manipulation unit 112. The processing unit 113B, for example, performs the calculation of a distance between the input device 12 and the watercraft 11 and the like. Moreover, the watercraft control device 113 has a normal watercraft control mode in which the actuator 111 is operated in accordance with an input manipulation received by the manipulation unit 112 and a remote watercraft maneuvering mode in which the manipulation unit 112 does not need to receive the input manipulation and the actuator 111 is operated in accordance with an input manipulation received by the manipulation unit 12C of the input device 12 to be described below.

The watercraft position detection unit 114 detects a position of the watercraft 11. The watercraft position detection unit 114 includes, for example, a GPS device. The GPS device receives signals from a plurality of GPS satellites and calculates position coordinates of the watercraft 11.

The bow orientation detection unit 115 detects a bow orientation of the watercraft 11. The bow orientation detection unit 115 includes, for example, an orientation sensor. The orientation sensor calculates an actual bow orientation of the watercraft 11 by using, for example, geomagnetism.

In another example, the orientation sensor may be a device (a gyrocompass) in which a north pointing device and a vibration control device are added to a high-speed rotating gyroscope to always indicate north.

In yet another example, the orientation sensor may be a GPS compass that includes a plurality of GPS antennas and calculates the bow orientation from a relative positional relationship of the plurality of GPS antennas.

In the example shown in FIG. 1, the communication unit 116 performs communication (specifically, wireless communication) with the input device 12. The communication unit 116 includes a communication antenna 116A. The communication antenna 116A, for example, performs the reception of radio waves transmitted from the input device 12, the transmission of radio waves to the input device 12, and the like.

The input device 12 receives an input manipulation of a remote watercraft maneuverer for remotely controlling the watercraft 11. The input device 12 includes a communication unit 12A, an input device position detection unit 12B, a manipulation unit 12C, and a notification unit 12D.

The communication unit 12A performs communication (specifically, wireless communication) with the watercraft 11. The input device position detection unit 12B detects a position of the input device 12. The input device position detection unit 12B includes, for example, a GPS device. The GPS device calculates position coordinates of the input device 12 by receiving signals from a plurality of GPS satellites. The manipulation unit 12C receives an input manipulation of the remote watercraft maneuverer for operating the actuator 111 of the watercraft 11. That is, the manipulation unit 12C receives an input manipulation of the remote watercraft maneuverer for remotely controlling the watercraft 11.

The notification unit 12D provides a notification for the remote watercraft maneuverer using the input device 12. The notification unit 12D provides a notification for the remote watercraft maneuverer by, for example, outputting a sound.

In another example, the notification unit 12D may provide a notification for the remote watercraft maneuverer or the like, for example, by displaying the notification on a display (not shown) of the input device 12 or vibrating the input device 12.

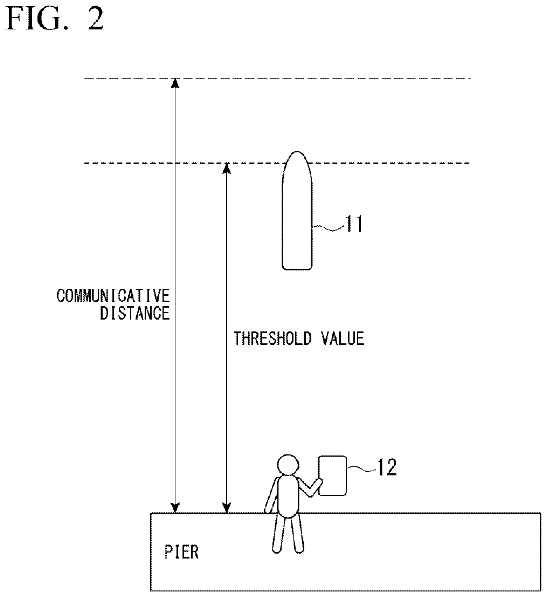

FIG. 2 is an explanatory diagram showing an example of a process executed in the remote watercraft maneuvering mode of the watercraft control device 113 of the first embodiment.

In the example shown in FIG. 2, in the remote watercraft maneuvering mode of the watercraft control device 113 of the watercraft 11, the actuator 111 of the watercraft 11 is operated in accordance with the input manipulation of the remote watercraft maneuverer received by the manipulation unit 12C of the input device 12 and the watercraft 11 moves forward in a direction (an upward direction of FIG. 2) away from the input device 12 of a pier.

Specifically, in the remote watercraft maneuvering mode of the watercraft control device 113, the input device position detection unit 12B of the input device 12 detects the position of the input device 12 and the communication unit 12A of the input device 12 transmits information indicating the position of the input device 12 to the watercraft 11.

Moreover, in the remote watercraft maneuvering mode of the watercraft control device 113, the communication unit 116 of the watercraft 11 receives information indicating the position of the input device 12 from the input device 12. Further, the watercraft position detection unit 114 of the watercraft 11 detects the position of the watercraft 11. The processing unit 113B of the watercraft control device 113 of the watercraft 11 calculates a distance between the input device 12 and the watercraft 11 on the basis of the position of the input device 12 detected by the input device position detection unit 12B of the input device 12 and the position of the watercraft 11 detected by the watercraft position detection unit 114 of the watercraft 11. Moreover, the processing unit 113B compares the distance between the input device 12 and the watercraft 11 with a preset "threshold value" (see FIG. 2). The "threshold value" is less than a "communicative distance" (see FIG. 2), which is a maximum value of the distance between the input device 12 and the watercraft 11 when communication between the communication unit 12A of the input device 12 and the communication unit 116 of the watercraft 11 is possible.

In the example shown in FIG. 2, for example, in an experiment performed in advance and the like, communication between the communication unit 12A of the input device 12 and the communication unit 116 of the watercraft 11 is performed and the "communicative distance" is set. Further, for example, in the experiment and the like, a relationship between the distance between the input device 12 and the watercraft 11 and an intensity of radio waves received by the communication unit 116 of the watercraft 11 from the input device 12 is acquired and the "threshold value" is set.

In another example, for example, the "communicative distance" and the "threshold value" may be set by performing a simulation in advance.

In the remote watercraft maneuvering mode of the watercraft control device 113, when the watercraft 11 moves forward and moves away from the input device 12 and the distance between the input device 12 and the watercraft 11 is greater than or equal to the "threshold value," the communication unit 116 of the watercraft 11 transmits information indicating that the distance between the input device 12 and the watercraft 11 is greater than or equal to the "threshold value" to the input device 12. Further, the notification unit 12D of the input device 12 provides a notification for the remote watercraft maneuverer using the input device 12. Therefore, the remote watercraft maneuverer can ascertain that there is a potential risk of disabled remote watercraft maneuvering if the watercraft 11 continuously moves forward.

In the example shown in FIG. 2, the remote watercraft maneuverer who has received the notification from the notification unit 12D, for example, performs an input manipulation for the manipulation unit 12C of the input device 12 to stop the forward movement of the watercraft 11, such that the forward movement of the watercraft 11 stops. As a result, the distance between the input device 12 and the watercraft 11 is not greater than the "communicative distance" and the remote watercraft maneuverer can continue remote watercraft maneuvering for the watercraft 11.

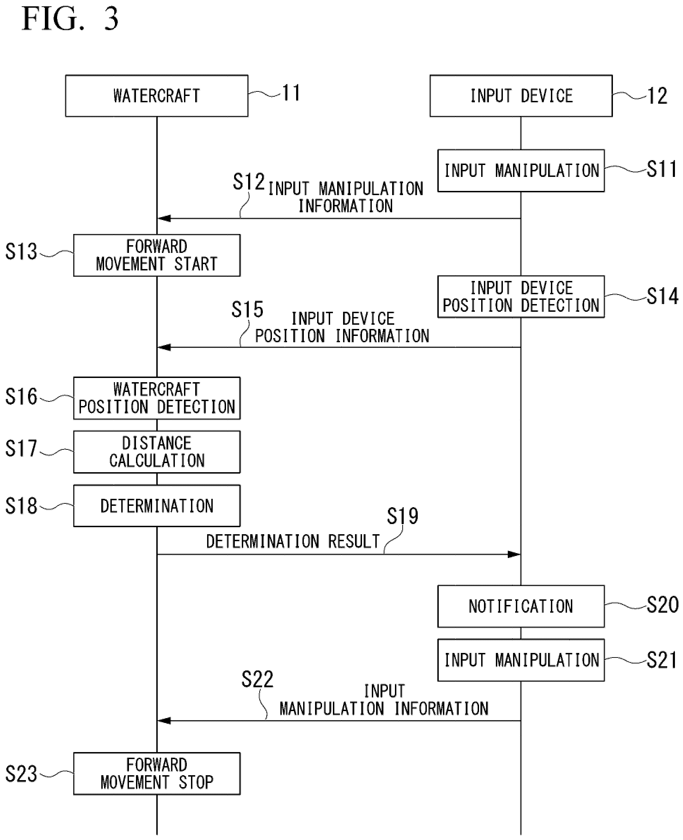

FIG. 3 is a sequence diagram for describing an example of a process executed in the remote watercraft maneuvering system 1 of the first embodiment in the remote watercraft maneuvering mode of the watercraft control device 113.

In the example shown in FIG. 3, in step S11, the manipulation unit 12C of the input device 12 receives, for example, an input manipulation of the remote watercraft maneuverer who moves the watercraft 11 forward.

Subsequently, in step S12, the communication unit 12A of the input device 12 transmits information indicating an input manipulation for performing the forward movement of the watercraft 11 received by the manipulation unit 12C in step S11, and the communication unit 116 of the watercraft 11 receives the information.

Subsequently, in step S13, the watercraft control device 113 of the watercraft 11 operates the actuator 111 in accordance with the input manipulation for performing the forward movement of the watercraft 11 received by the manipulation unit 12C of the input device 12 and the forward movement of the watercraft 11 starts.

In step S14, the input device position detection unit 12B of the input device 12 detects a position of the input device 12. Specifically, the detection of the position of the input device 12 by the input device position detection unit 12B is repeatedly executed in the remote watercraft maneuvering mode of the watercraft control device 113.

Subsequently, in step S15, the communication unit 12A of the input device 12 transmits information indicating the position of the input device 12 detected in step S14 and the communication unit 116 of the watercraft 11 receives the information.

In step S16, the watercraft position detection unit 114 of the watercraft 11 detects the position of the watercraft 11. Specifically, the detection of the position of the watercraft 11 by the watercraft position detection unit 114 is repeatedly executed in the remote watercraft maneuvering mode of the watercraft control device 113.

Subsequently, in step S17, the processing unit 113B of the watercraft control device 113 of the watercraft 11 calculates the distance between the input device 12 and the watercraft 11 on the basis of the position of the input device 12 detected in step S14 and the position of the watercraft 11 detected in step S16.

Subsequently, in step S18, the processing unit 113B of the watercraft control device 113 of the watercraft 11 determines whether or not the distance between the input device 12 and the watercraft 11 calculated in step S17 is greater than or equal to the "threshold value." In the example shown in FIG. 3, in step S18, the processing unit 113B determines that the distance between the input device 12 and the watercraft 11 is greater than or equal to the "threshold value."

Subsequently, in step S19, the communication unit 116 of the watercraft 11 transmits information indicating that the distance between the input device 12 and the watercraft 11 is greater than or equal to the "threshold value" and the communication unit 12A of the input device 12 receives the information.

Subsequently, in step S20, the notification unit 12D of the input device 12 provides the notification for the remote watercraft maneuverer using the input device 12. Therefore, the remote watercraft maneuverer can ascertain that there is a potential risk of disabled remote watercraft maneuvering if the watercraft 11 continuously moves forward.

Subsequently, in step S21, the manipulation unit 12C of the input device 12 receives an input manipulation of the remote watercraft maneuverer for stopping the forward movement of the watercraft 11.

Subsequently, in step S22, the communication unit 12A of the input device 12 transmits information indicating the input manipulation for stopping the forward movement of the watercraft 11 received by the manipulation unit 12C in step S21 and the communication unit 116 of the watercraft 11 receives the information.

Subsequently, in step S23, the watercraft control device 113 of the watercraft 11 operates the actuator 111 in accordance with the input manipulation for stopping the forward movement of the watercraft 11 received by the manipulation unit 12C of the input device 12, and the forward movement of the watercraft 11 stops. As a result, the distance between the input device 12 and the watercraft 11 is not greater than the "communicative distance" and the remote watercraft maneuverer can continue remote watercraft maneuvering for the watercraft 11.

Thus, even in the remote manipulation scene of the watercraft 11, a failsafe function is required for communication interruption between the input device 12 and the watercraft 11. This is because, if the input device 12 and the watercraft 11 are too far apart during remote watercraft maneuvering, there is a danger when the communication between the input device 12 and the watercraft 11 is interrupted and the remote manipulation for the watercraft 11 becomes ineffective.

In the notification for the remote watercraft maneuverer after the communication between the input device 12 and the watercraft 11 is interrupted or the notification for the remote watercraft maneuverer after the intensity of radio waves received by the input device 12 and the watercraft 11 from the other party is weakened, the manipulation of the remote watercraft maneuverer receiving the notification may already be ineffective.

Therefore, in the remote watercraft maneuvering system 1 of the first embodiment, as described above, the notification for the remote watercraft maneuverer is provided in the step before the distance between the input device 12 and the watercraft 11 is less than the "communicative distance" (see FIG. 2) and is greater than or equal to the "threshold value" (see FIG. 2) (specifically, in the step before communication is interrupted and the step before the intensity of radio waves is weakened). Therefore, in the remote watercraft maneuvering system 1 of the first embodiment, the remote watercraft maneuverer can ascertain a possibility of a disabled remote manipulation for the watercraft 11 through the notification, the watercraft 11 can be appropriately remotely manipulated after the reception of the notification, and a situation of a disabled remote manipulation for the watercraft 11 can be reliably avoided.

### <Second Embodiment>

Hereinafter, a second embodiment of a remote watercraft maneuvering system, a watercraft control device, an input device, a remote watercraft maneuvering method, and a program of the present invention will be described.

A configuration of a remote watercraft maneuvering system 1 of the second embodiment is similar to that of the remote watercraft maneuvering system 1 of the first embodiment described above, except for points to be described below. Therefore, it is possible to achieve an effect of the remote watercraft maneuvering system 1 of the second embodiment similar to that of the remote watercraft maneuvering system 1 of the first embodiment described above, except for points to be described below.

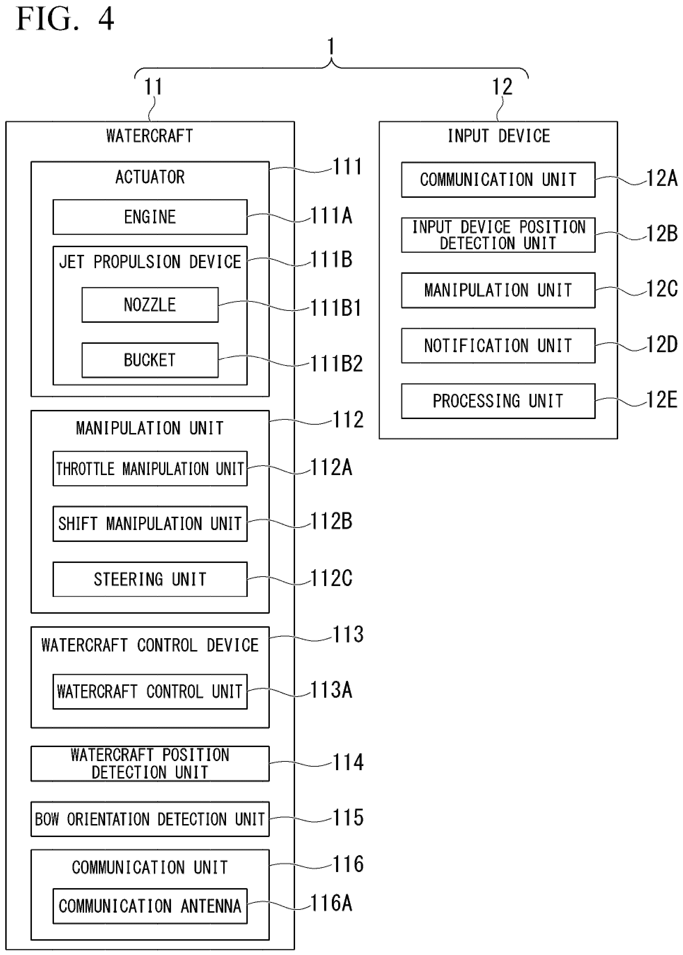

FIG. 4 is a diagram showing an example of the remote watercraft maneuvering system 1 of the second embodiment.

As described above, in the example shown in FIG. 1, the watercraft control device 113 includes a watercraft control unit 113A and a processing unit 113B.

On the other hand, in the example shown in FIG. 4, a watercraft control device 113 includes the watercraft control unit 113A and does not include a processing unit.

Moreover, as described above, in the example shown in FIG. 1, the input device 12 includes the communication unit 12A, the input device position detection unit 12B, the manipulation unit 12C, and the notification unit 12D.

On the other hand, in the example shown in FIG. 4, the input device 12 includes a communication unit 12A, an input device position detection unit 12B, a manipulation unit 12C, a notification unit 12D, and a processing unit 12E. The processing unit 12E calculates, for example, a distance between the input device 12 and the watercraft 11.

That is, the distance between the input device 12 and the watercraft 11 is calculated by the watercraft 11 in the example shown in FIG. 1, whereas the distance between the input device 12 and the watercraft 11 is calculated by the input device 12 in the example shown in FIG. 4.

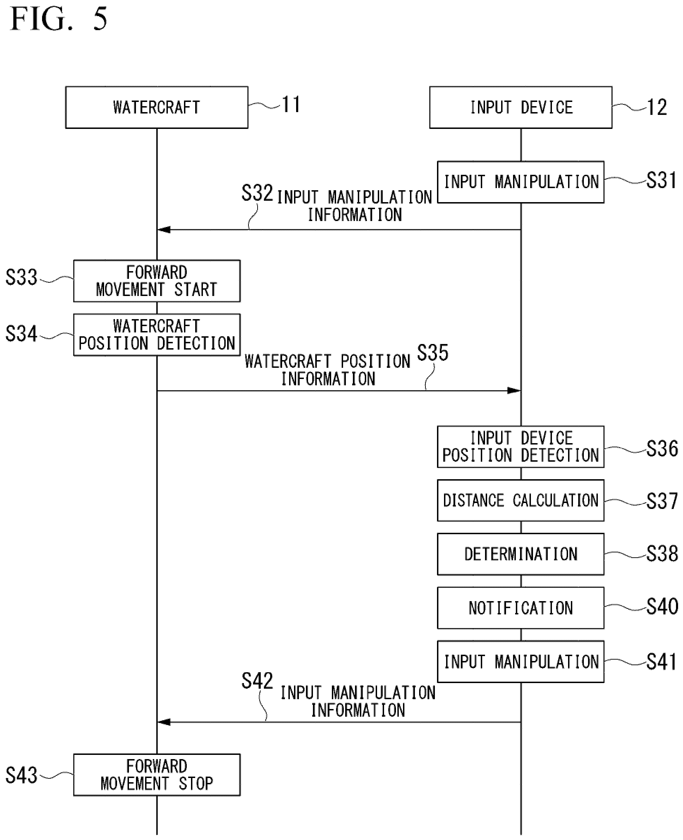

FIG. 5 is a sequence diagram for describing an example of a process executed in the remote watercraft maneuvering system 1 of the second embodiment in a remote watercraft maneuvering mode of the watercraft control device 113.

In the example shown in FIG. 5, in step S31, the manipulation unit 12C of the input device 12 receives, for example, an input manipulation of a remote watercraft maneuverer for performing the forward movement of the watercraft 11.

Subsequently, in step S32, the communication unit 12A of the input device 12 transmits information indicating the input manipulation for performing the forward movement of the watercraft 11 received by the manipulation unit 12C in step S31 and the communication unit 116 of the watercraft 11 receives the information.

Subsequently, in step S33, the watercraft control device 113 of the watercraft 11 operates the actuator 111 in accordance with the input manipulation for performing the forward movement of the watercraft 11 received by the manipulation unit 12C of the input device 12 and the forward movement of the watercraft 11 starts.

In step S34, the watercraft position detection unit 114 of the watercraft 11 detects the position of the watercraft 11. Specifically, the detection of the position of the watercraft 11 by the watercraft position detection unit 114 is repeatedly executed in the remote watercraft maneuvering mode of the watercraft control device 113.

Subsequently, in step S35, the communication unit 116 of the watercraft 11 transmits information indicating the position of the watercraft 11 detected in step S34, and the communication unit 12A of the input device 12 receives the information.

In step S36, the input device position detection unit 12B of the input device 12 detects the position of the input device 12. Specifically, the detection of the position of the input device 12 by the input device position detection unit 12B is repeatedly executed in the remote watercraft maneuvering mode of the watercraft control device 113.

Subsequently, in step S37, the processing unit 12E of the input device 12 calculates the distance between the input device 12 and the watercraft 11 on the basis of the position of the input device 12 detected in step S36 and the position of the watercraft 11 detected in step S34.

Subsequently, in step S38, the processing unit 12E of the input device 12 determines whether or not the distance between the input device 12 and the watercraft 11 calculated in step S37 is greater than or equal to the "threshold value." In the example shown in FIG. 5, as in the example shown in FIG. 2, the "threshold value" (see FIG. 2) is less than the "communicative distance" (see FIG. 2) that is a maximum value of the distance between the input device 12 and the watercraft 11 when communication between the communication unit 12A of the input device 12 and the communication unit 116 of the watercraft 11 is possible. In the example shown in FIG. 5, in step S38, the processing unit 12E determines that the distance between the input device 12 and the watercraft 11 is greater than or equal to the "threshold value."

Subsequently, in step S40, the notification unit 12D of the input device 12 provides a notification for the remote watercraft maneuverer using the input device 12. Therefore, the remote watercraft maneuverer can ascertain that there is a potential risk of disabled remote watercraft maneuvering if the watercraft 11 continuously moves forward.

Subsequently, in step S41, the manipulation unit 12C of the input device 12 receives an input manipulation of the remote watercraft maneuverer for stopping the forward movement of the watercraft 11.

Subsequently, in step S42, the communication unit 12A of the input device 12 transmits information indicating the input manipulation for stopping the forward movement of the watercraft 11 received by the manipulation unit 12C in step S41 and the communication unit 116 of the watercraft 11 receives the information.

Subsequently, in step S43, the watercraft control device 113 of the watercraft 11 operates the actuator 111 in accordance with the input manipulation for stopping the forward movement of the watercraft 11 received by the manipulation unit 12C of the input device 12 and the forward movement of the watercraft 11 stops. As a result, the distance between the input device 12 and the watercraft 11 is not greater than the "communicative distance" and the remote watercraft maneuverer can continue remote watercraft maneuvering for the watercraft 11.

### <Third Embodiment>

Hereinafter, a third embodiment of a remote watercraft maneuvering system, a watercraft control device, an input device, a remote watercraft maneuvering method, and a program of the present invention will be described.

A configuration of a remote watercraft maneuvering system 1 of the third embodiment is similar to that of the remote watercraft maneuvering system 1 of the first embodiment described above, except for points to be described below. Therefore, it is possible to achieve an effect of the remote watercraft maneuvering system 1 of the third embodiment similar to that of the remote watercraft maneuvering system 1 of the first embodiment described above, except for points to be described below.

A configuration of the remote watercraft maneuvering system 1 of the third embodiment is similar to that of the remote watercraft maneuvering system 1 of the first embodiment shown in FIG. 1.

In the remote watercraft maneuvering system 1 of the third embodiment, a watercraft control device 113 of a watercraft 11 has an auto return mode. In the auto return mode of the watercraft control device 113, the watercraft control device 113 operates an actuator 111 so that the watercraft 11 approaches an input device 12 in a state in which a manipulation unit 112 of the watercraft 11 does not need to receive any input manipulation and a manipulation unit 12C of the input device 12 does not need to receive any input manipulation.

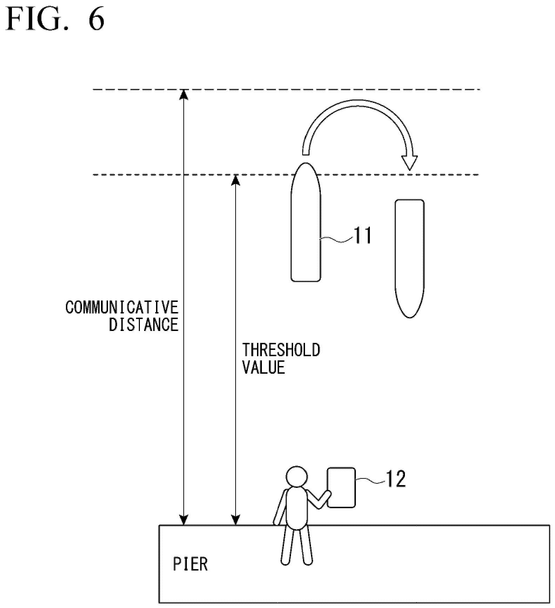

FIG. 6 is an explanatory diagram showing an example of a process executed in a remote watercraft maneuvering mode of the watercraft control device 113 of the third embodiment.

In the example shown in FIG. 6, in the remote watercraft maneuvering mode of the watercraft control device 113 of the watercraft 11, initially, the actuator 111 of the watercraft 11 is operated in accordance with the input manipulation of the remote watercraft maneuverer received by the manipulation unit 12C of the input device 12 and the watercraft 11 moves forward in a direction away from the input device 12 of the pier (an upward direction of FIG. 6).

Specifically, in the remote watercraft maneuvering mode of the watercraft control device 113, the input device position detection unit 12B of the input device 12 detects the position of the input device 12 and the communication unit 12A of the input device 12 transmits information indicating the position of the input device 12 to the watercraft 11.

Moreover, in the remote watercraft maneuvering mode of the watercraft control device 113, the communication unit 116 of the watercraft 11 receives information indicating the position of the input device 12 from the input device 12. Further, the watercraft position detection unit 114 of the watercraft 11 detects the position of the watercraft 11. The processing unit 113B of the watercraft control device 113 of the watercraft 11 calculates the distance between the input device 12 and the watercraft 11 on the basis of the position of the input device 12 detected by the input device position detection unit 12B of the input device 12 and the position of the watercraft 11 detected by the watercraft position detection unit 114 of the watercraft 11. Moreover, the processing unit 113B compares the distance between the input device 12 and the watercraft 11 with a preset "threshold value" (see FIG. 6). The "threshold value" is less than a "communicative distance" (see FIG. 6), which is a maximum value of the distance between the input device 12 and the watercraft 11 when communication between the communication unit 12A of the input device 12 and the communication unit 116 of the watercraft 11 is possible.

In the remote watercraft maneuvering mode of the watercraft control device 113, when the watercraft 11 moves forward and moves away from the input device 12 and the distance between the input device 12 and the watercraft 11 is greater than or equal to the "threshold value," the communication unit 116 of the watercraft 11 transmits information indicating that the distance between the input device 12 and the watercraft 11 is greater than or equal to the "threshold value" to the input device 12. Further, the notification unit 12D of the input device 12 provides a notification for the remote watercraft maneuverer using the input device 12. Therefore, the remote watercraft maneuverer can ascertain that there is a potential risk of disabled remote watercraft maneuvering if the watercraft 11 continuously moves forward.

Specifically, in the example shown in FIG. 6, when the distance between the input device 12 and the watercraft 11 is greater than or equal to the "threshold value," the watercraft control device 113 switches the mode from the remote watercraft maneuvering mode to the auto return mode in a state in which the manipulation unit 112 of the watercraft 11 does not need to receive any input manipulation and the manipulation unit 12C of the input device 12 does not need to receive any input manipulation. As a result, the watercraft control device 113 operates the actuator 111 so that the watercraft 11 approaches the input device 12 in a state in which the manipulation unit 112 of the watercraft 11 does not need to receive any input manipulation and the manipulation unit 12C of the input device 12 does not need to receive any input manipulation. Therefore, the distance between the input device 12 and the watercraft 11 is not greater than the "communicative distance."

That is, in the example shown in FIG. 6, it is possible to reliably avoid a situation of disabled remote watercraft maneuvering. Moreover, in the example shown in FIG. 6, because the actuator 111 is operated so that the watercraft 11 approaches the input device 12, it is possible to suppress a possibility that the watercraft 11 will be swept to the right or left side of the input device 12 in FIG. 6 due to wind, tide, or the like.

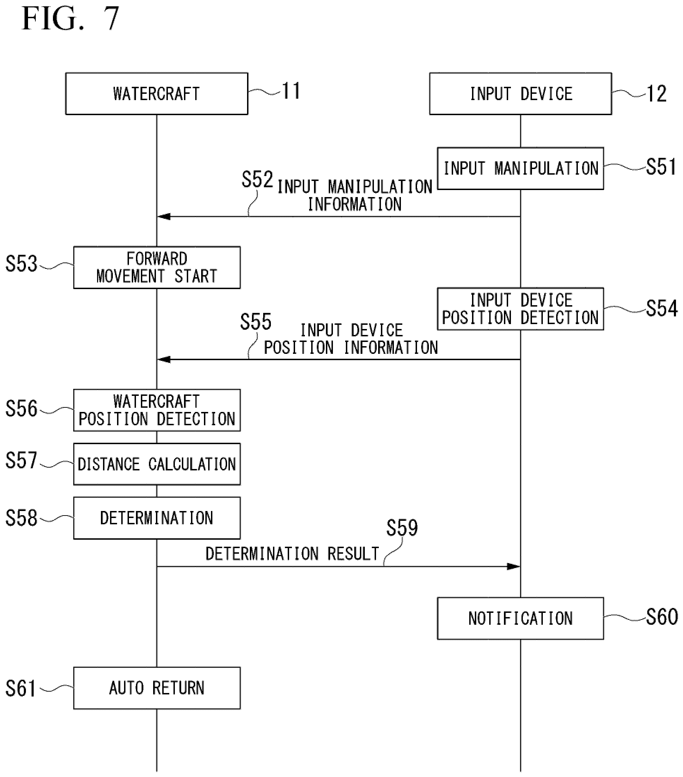

FIG. 7 is a sequence diagram for describing an example of a process executed in the remote watercraft maneuvering system 1 of the third embodiment in the remote watercraft maneuvering mode of the watercraft control device 113 or the like.

In the example shown in FIG. 7, in step S51, the manipulation unit 12C of the input device 12, for example, receives an input manipulation of a remote watercraft maneuverer for perform the forward movement of the watercraft 11.

Subsequently, in step S52, the communication unit 12A of the input device 12 transmits information indicating the input manipulation for performing the forward movement of the watercraft 11 received by the manipulation unit 12C in step S51 and the communication unit 116 of the watercraft 11 receives the information.

Subsequently, in step S53, the watercraft control device 113 of the watercraft 11 operates the actuator 111 in accordance with the input manipulation for performing the forward movement of the watercraft 11 received by the manipulation unit 12C of the input device 12 and the forward movement of the watercraft 11 starts.

In step S54, the input device position detection unit 12B of the input device 12 detects the position of the input device 12. Specifically, the detection of the position of the input device 12 by the input device position detection unit 12B is repeatedly executed in the remote watercraft maneuvering mode and the auto return mode of the watercraft control device 113.

Subsequently, in step S55, the communication unit 12A of the input device 12 transmits information indicating the position of the input device 12 detected in step S54 and the communication unit 116 of the watercraft 11 receives the information.

In step S56, the watercraft position detection unit 114 of the watercraft 11 detects the position of the watercraft 11. Specifically, the detection of the position of the watercraft 11 by the watercraft position detection unit 114 is repeatedly executed in the remote watercraft maneuvering mode and the auto return mode of the watercraft control device 113.

Subsequently, in step S57, the processing unit 113B of the watercraft control device 113 of the watercraft 11 calculates the distance between the input device 12 and the watercraft 11 on the basis of the position of the input device 12 detected in step S54 and the position of the watercraft 11 detected in step S56.

Subsequently, in step S58, the processing unit 113B of the watercraft control device 113 of the watercraft 11 determines whether or not the distance between the input device 12 and the watercraft 11 calculated in step S57 is greater than or equal to a "threshold value." In the example shown in FIG. 7, in step S58, the processing unit 113B determines that the distance between the input device 12 and the watercraft 11 is greater than or equal to the "threshold value."

Subsequently, in step S59, the communication unit 116 of the watercraft 11 transmits information indicating that the distance between the input device 12 and the watercraft 11 is greater than or equal to the "threshold value" and the communication unit 12A of the input device 12 receives the information.

Subsequently, in step S60, the notification unit 12D of the input device 12 provides a notification for the remote watercraft maneuverer using the input device 12. Therefore, the remote watercraft maneuverer can ascertain that there is a potential risk of disabled remote watercraft maneuvering if the watercraft 11 continuously moves forward.

Moreover, in step S61, the watercraft control device 113 switches the mode from the remote watercraft maneuvering mode to the auto return mode in a state in which the manipulation unit 112 of the watercraft 11 does not need to receive any input manipulation and the manipulation unit 12C of the input device 12 does not need to receive any input manipulation.

Specifically, in step S61, the watercraft control device 113 operates the actuator 111 so that the watercraft 11 approaches the input device 12 in a state in which the manipulation unit 112 of the watercraft 11 does not need to receive any input manipulation and the manipulation unit 12C of the input device 12 does not need to receive any input manipulation.

Because the notification is provided for the remote watercraft maneuverer in step S60, the remote watercraft maneuverer can easily ascertain that the mode has been automatically switched from the remote watercraft maneuvering mode to the auto return mode.

### <Fourth Embodiment>

Hereinafter, a fourth embodiment of a remote watercraft maneuvering system, a watercraft control device, an input device, a remote watercraft maneuvering method, and a program of the present invention will be described.

A configuration of a remote watercraft maneuvering system 1 of the fourth embodiment is similar to that of the remote watercraft maneuvering system 1 of the second embodiment described above, except for points to be described below. Therefore, it is possible to achieve an effect of the remote watercraft maneuvering system 1 of the fourth embodiment similar to that of the remote watercraft maneuvering system 1 of the second embodiment described above, except for points to be described below.

A configuration of the remote watercraft maneuvering system 1 of the fourth embodiment is similar to that of the remote watercraft maneuvering system 1 of the second embodiment shown in FIG. 4.

In the remote watercraft maneuvering system 1 of the fourth embodiment, a watercraft control device 113 of a watercraft 11 has an auto return mode. In the auto return mode of the watercraft control device 113, the watercraft control device 113 operates the actuator 111 so that the watercraft 11 approaches an input device 12 in a state in which a manipulation unit 112 of the watercraft 11 does not need to receive any input manipulation and a manipulation unit 12C of the input device 12 does not need to receive any input manipulation.

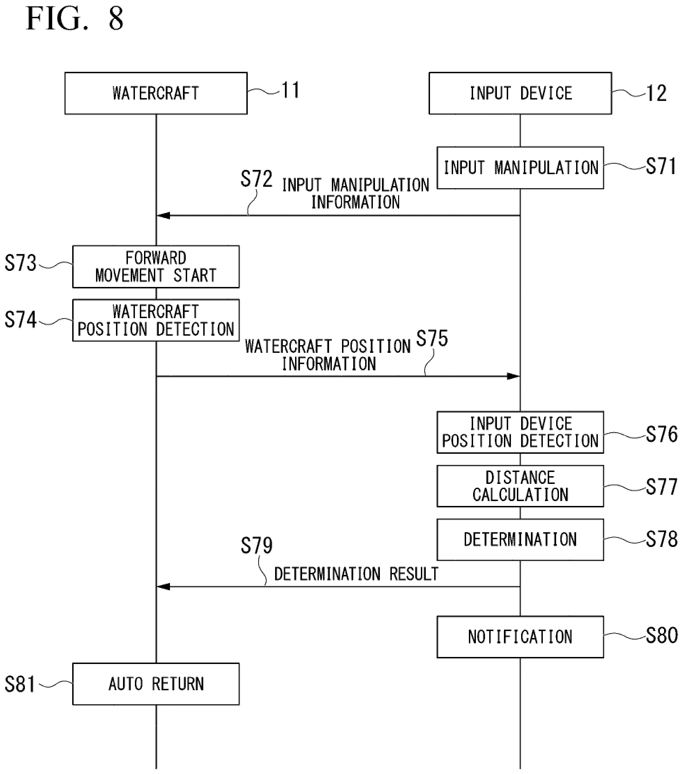

FIG. 8 is a sequence diagram for describing an example of a process executed in the remote watercraft maneuvering system 1 of the fourth embodiment in a remote watercraft maneuvering mode of the watercraft control device 113 or the like.

In the example shown in FIG. 8, in step S71, the manipulation unit 12C of the input device 12 receives, for example, an input manipulation of a remote watercraft maneuverer for the forward movement of the watercraft 11.

Subsequently, in step S72, a communication unit 12A of the input device 12 transmits information indicating the input manipulation for performing the forward movement of the watercraft 11 received by the manipulation unit 12C in step S71 and a communication unit 116 of the watercraft 11 receives the information.

Subsequently, in step S73, the watercraft control device 113 of the watercraft 11 operates the actuator 111 in accordance with the input manipulation for performing the forward movement of the watercraft 11 received by the manipulation unit 12C of the input device 12 and the forward movement of the watercraft 11 starts.

In step S74, a watercraft position detection unit 114 of the watercraft 11 detects the position of the watercraft 11. Specifically, the detection of the position of the watercraft 11 by the watercraft position detection unit 114 is repeatedly executed in the remote watercraft maneuvering mode and the auto return mode of the watercraft control device 113.

Subsequently, in step S75, the communication unit 116 of the watercraft 11 transmits information indicating the position of the watercraft 11 detected in step S74 and the communication unit 12A of the input device 12 receives the information.

In step S76, an input device position detection unit 12B of the input device 12 detects the position of the input device 12. Specifically, the detection of the position of the input device 12 by the input device position detection unit 12B is repeatedly executed in the remote watercraft maneuvering mode and the auto return mode of the watercraft control device 113.

Subsequently, in step S77, the processing unit 12E of the input device 12 calculates the distance between the input device 12 and the watercraft 11 on the basis of the position of the input device 12 detected in step S76 and the position of the watercraft 11 detected in step S74.

Subsequently, in step S78, the processing unit 12E of the input device 12 determines whether or not the distance between the input device 12 and the watercraft 11 calculated in step S77 is greater than or equal to the "threshold value." In the example shown in FIG. 8, in step S78, the processing unit 12E determines that the distance between the input device 12 and the watercraft 11 is greater than or equal to the "threshold value."

Subsequently, in step S79, the communication unit 12A of the input device 12 transmits a result of the determination made in step S78 and the communication unit 116 of the watercraft 11 receives the determination result.

Moreover, in step S80, the notification unit 12D of the input device 12 provides a notification for the remote watercraft maneuverer using the input device 12. Therefore, the remote watercraft maneuverer can ascertain that there is a potential risk of disabled remote watercraft maneuvering if the watercraft 11 continuously moves forward.

In step S81, the watercraft control device 113 switches the mode from the remote watercraft maneuvering mode to the auto return mode in a state in which the manipulation unit 112 of the watercraft 11 does not need to receive any input manipulation and the manipulation unit 12C of the input device 12 does not need to receive any input manipulation on the basis of the determination result transmitted from the input device 12 in step S79.

Specifically, in step S81, the watercraft control device 113 operates the actuator 111 so that the watercraft 11 approaches the input device 12 in a state in which the manipulation unit 112 of the watercraft 11 does not need to receive any input manipulation and the manipulation unit 12C of the input device 12 does not need to receive any input manipulation.

Because the notification is provided for the remote watercraft maneuverer in step S80, the remote watercraft maneuverer can easily ascertain that the mode has been automatically switched from the remote watercraft maneuvering mode to the auto return mode.

### <Fifth Embodiment>

Hereinafter, a fifth embodiment of a remote watercraft maneuvering system, a watercraft control device, an input device, a remote watercraft maneuvering method, and a program of the present invention will be described.

A configuration of a remote watercraft maneuvering system 1 of the fifth embodiment is similar to that of the remote watercraft maneuvering system 1 of the first embodiment described above, except for points to be described below. Therefore, it is possible to achieve an effect of the remote watercraft maneuvering system 1 of the fifth embodiment similar to that of the remote watercraft maneuvering system 1 of the first embodiment described above, except for points to be described below.

As described above, in the remote watercraft maneuvering system 1 of the first embodiment, for example, a "threshold value" set in an experiment performed in advance or the like is used for the comparison (determination) of a distance between an input device 12 and a watercraft 11 in a processing unit 113B of a watercraft control device 113 in a remote watercraft maneuvering mode of the watercraft control device 113. That is, in the remote watercraft maneuvering system 1 of the first embodiment, the "threshold value" is a certain value (a fixed value).

On the other hand, in the remote watercraft maneuvering system 1 of the fifth embodiment, the "threshold value" is a variable value. Specifically, the processing unit 113B of the watercraft control device 113 of the watercraft 11 changes a magnitude of the "threshold value" (see FIG. 2) in accordance with an intensity of radio waves received from the input device 12 by a communication unit 116 of the watercraft 11. Specifically, the processing unit 113B of the watercraft control device 113 increases the "threshold value" as the intensity of the radio waves received from the input device 12 by the communication unit 116 of the watercraft 11 increases.

In an example of the remote watercraft maneuvering system 1 of the fifth embodiment, the communication unit 116 of the watercraft 11 detects the intensity of the radio waves received from the input device 12 in the remote watercraft maneuvering mode of the watercraft control device 113 and the processing unit 113B of the watercraft control device 113 records the intensity of the radio waves detected by the communication unit 116 in association with the distance between the input device 12 and the watercraft 11.

Moreover, the processing unit 113B, for example, acquires a corresponding relationship between the intensity of the radio waves received from the input device 12 by the communication unit 116 of the watercraft 11 and the distance between the input device 12 and the watercraft 11 obtained in a preliminary experiment or the like.

Furthermore, the processing unit 113B, for example, compares the corresponding relationship obtained in the preliminary experiment or the like with the corresponding relationship between the intensity of the radio waves received from the input device 12 by a communication unit 116 of the watercraft 11 and the distance between the input device 12 and the watercraft 11 recorded in the remote watercraft maneuvering mode of the watercraft control device 113. Specifically, the processing unit 113B determines whether or not the intensity of the radio waves received from the input device 12 by the communication unit 116 of the watercraft 11 in the remote watercraft maneuvering mode of the watercraft control device 113 is higher than, for example, the intensity of the radio waves received from the input device 12 by the communication unit 116 of the watercraft 11 in the preliminary experiment or the like.

When the intensity of the radio waves received from the input device 12 by the communication unit 116 of the watercraft 11 in the remote watercraft maneuvering mode of the watercraft control device 113 is higher than, for example, the intensity of the radio waves received from the input device 12 by the communication unit 116 of the watercraft 11 in the preliminary experiment or the like, the processing unit 113B makes the "threshold value" used in the remote watercraft maneuvering mode of the watercraft control device 113 larger than, for example, a "threshold value" set in advance on the basis of the preliminary experiment or the like.

On the other hand, when the intensity of the radio waves received from the input device 12 by the communication unit 116 of the watercraft 11 in the remote watercraft maneuvering mode of the watercraft control device 113 is lower than, for example, the intensity of the radio waves received from the input device 12 by the communication unit 116 of the watercraft 11 in the preliminary experiment or the like, the processing unit 113B makes the "threshold value" used in the remote watercraft maneuvering mode of the watercraft control device 113 smaller than, for example, the "threshold value" set in advance on the basis of the preliminary experiment or the like.

### <Sixth Embodiment>

Hereinafter, a sixth embodiment of a remote watercraft maneuvering system, a watercraft control device, an input device, a remote watercraft maneuvering method, and a program of the present invention will be described.

A configuration of a remote watercraft maneuvering system 1 of the sixth embodiment is similar to that of the remote watercraft maneuvering system 1 of the second embodiment described above, except for points to be described below. Therefore, it is possible to achieve an effect of the remote watercraft maneuvering system 1 of the sixth embodiment similar to that of the remote watercraft maneuvering system 1 of the second embodiment described above, except for points to be described below.

As described above, in the remote watercraft maneuvering system 1 of the second embodiment, for example, a "threshold value" set in an experiment performed in advance or the like is used for the comparison (determination) of a distance between an input device 12 and a watercraft 11 in a processing unit 12E of the input device 12 in a remote watercraft maneuvering mode of a watercraft control device 113. That is, in the remote watercraft maneuvering system 1 of the second embodiment, the "threshold value" is a certain value (a fixed value).

On the other hand, in the remote watercraft maneuvering system 1 of the sixth embodiment, the "threshold value" is a variable value. Specifically, the processing unit 12E of the input device 12 changes the magnitude of the "threshold value" (see FIG. 2) in accordance with an intensity of radio waves received from the watercraft 11 by a communication unit 12A of the input device 12. Specifically, the processing unit 12E of the input device 12 increases the "threshold value" as the intensity of the radio waves received from the watercraft 11 by the communication unit 12A of the input device 12 increases.

In an example of the remote watercraft maneuvering system 1 of the sixth embodiment, the communication unit 12A of the input device 12 detects the intensity of the radio waves received from the watercraft 11 in the remote watercraft maneuvering mode of the watercraft control device 113 and the processing unit 12E of the input device 12 records the intensity of the radio waves detected by the communication unit 12A in association with a distance between the input device 12 and the watercraft 11.

Moreover, the processing unit 12E, for example, acquires a corresponding relationship between the intensity of the radio waves received from the watercraft 11 by the communication unit 12A of the input device 12 and the distance between the input device 12 and the watercraft 11 obtained in a preliminary experiment or the like.

Further, the processing unit 12E, for example, compares the corresponding relationship obtained in the preliminary experiment or the like with a corresponding relationship between the intensity of the radio waves received by the communication unit 12A of the input device 12 from the watercraft 11 and the distance between the input device 12 and the watercraft 11 recorded in the remote watercraft maneuvering mode of the watercraft control device 113. Specifically, the processing unit 12E determines whether or not the intensity of the radio waves received from the watercraft 11 by the communication unit 12A of the input device 12 in the remote watercraft maneuvering mode of the watercraft control device 113 is higher than, for example, the intensity of the radio waves received from the watercraft 11 by the communication unit 12A of the input device 12 in the preliminary experiment or the like.

When the intensity of the radio waves received from the watercraft 11 by the communication unit 12A of the input device 12 in the remote watercraft maneuvering mode of the watercraft control device 113 is higher than, for example, the intensity of the radio waves received from the watercraft 11 by the communication unit 12A of the input device 12 in the preliminary experiment or the like, the processing unit 12E makes the "threshold value" used in the remote watercraft maneuvering mode of the watercraft control device 113 larger than, for example, a "threshold value" set in advance on the basis of the preliminary experiment or the like.

On the other hand, when the intensity of the radio waves received from the watercraft 11 by the communication unit 12A of the input device 12 in the remote watercraft maneuvering mode of the watercraft control device 113 is lower than, for example, the intensity of the radio waves received from the watercraft 11 by the communication unit 12A of the input device 12 in the preliminary experiment or the like, the processing unit 12E makes the "threshold value" used in the remote watercraft maneuvering mode of the watercraft control device 113 smaller than, for example, the "threshold value" set in advance on the basis of the preliminary experiment or the like.

### <Seventh Embodiment>

Hereinafter, a seventh embodiment of a remote watercraft maneuvering system, a watercraft control device, an input device, a remote watercraft maneuvering method, and a program of the present invention will be described.

A configuration of a remote watercraft maneuvering system 1 of the seventh embodiment is similar to that of the remote watercraft maneuvering system 1 of the first embodiment described above, except for points to be described below. Therefore, it is possible to achieve an effect of the remote watercraft maneuvering system 1 of the seventh embodiment similar to that of the remote watercraft maneuvering system 1 of the first embodiment described above, except for points to be described below.

A configuration of the remote watercraft maneuvering system 1 of the seventh embodiment is similar to that of the remote watercraft maneuvering system 1 of the first embodiment shown in FIG. 1.

In the remote watercraft maneuvering system 1 of the seventh embodiment, a watercraft control device 113 of a watercraft 11 has a fixed-point holding mode. In the fixed-point holding mode of the watercraft control device 113, the watercraft control device 113 operates an actuator 111 on the basis of a deviation between an actual watercraft position that is a position of the watercraft 11 detected by a watercraft position detection unit 114 and a target watercraft position that is a target position of the watercraft 11 in a state in which a manipulation unit 112 of the watercraft 11 does not need to receive any input manipulation and a manipulation unit 12C of an input device 12 does not need to receive any input manipulation.

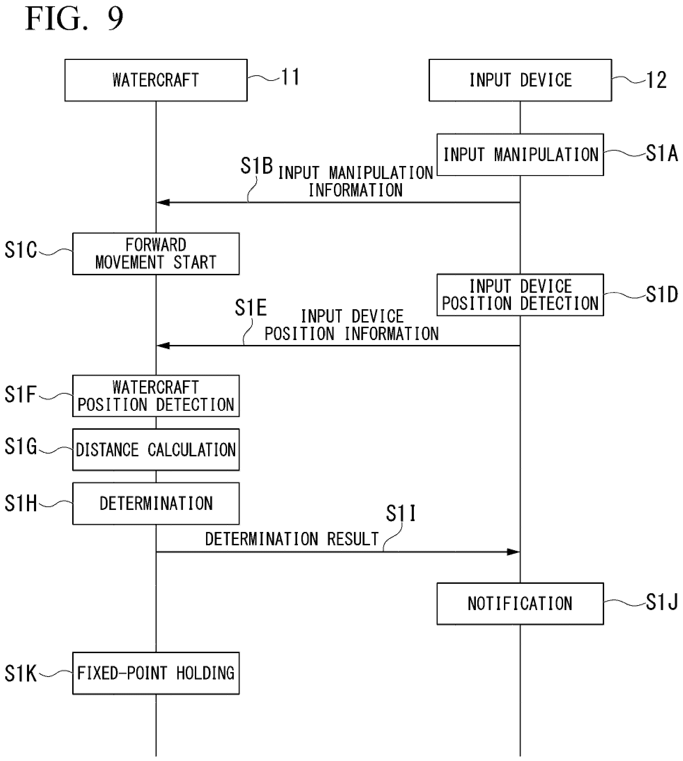

FIG. 9 is a sequence diagram for describing an example of a process executed in the remote watercraft maneuvering system 1 of the seventh embodiment in a remote watercraft maneuvering mode of the watercraft control device 113 or the like.

In the example shown in FIG. 9, in step S1A, the manipulation unit 12C of the input device 12 receives, for example, an input manipulation of a remote watercraft maneuverer for performing the forward movement of the watercraft 11.

Subsequently, in step S1B, the communication unit 12A of the input device 12 transmits information indicating the input manipulation for performing the forward movement of the watercraft 11 received by the manipulation unit 12C in step S1A and a communication unit 116 of the watercraft 11 receives the information.

Subsequently, in step S1C, the watercraft control device 113 of the watercraft 11 operates the actuator 111 in accordance with the input manipulation for performing the forward movement of the watercraft 11 received by the manipulation unit 12C of the input device 12 and the forward movement of the watercraft 11 starts.

In step S1D, the input device position detection unit 12B of the input device 12 detects a position of the input device 12. Specifically, the detection of the position of the input device 12 by the input device position detection unit 12B is repeatedly executed in the remote watercraft maneuvering mode and the fixed-point holding mode of the watercraft control device 113.

Subsequently, in step S1E, the communication unit 12A of the input device 12 transmits information indicating the position of the input device 12 detected in step S1D and the communication unit 116 of the watercraft 11 receives the information.

In step S1F, the watercraft position detection unit 114 of the watercraft 11 detects a position (an actual watercraft position) of the watercraft 11. Specifically, the detection of the position of the watercraft 11 by the watercraft position detection unit 114 is repeatedly executed in the remote watercraft maneuvering mode and the fixed-point holding mode of the watercraft control device 113.

Subsequently, in step S1G, the processing unit 113B of the watercraft control device 113 of the watercraft 11 calculates a distance between the input device 12 and the watercraft 11 on the basis of the position of the input device 12 detected in step S1D and the position of the watercraft 11 detected in step S1F.

Subsequently, in step S1H, the processing unit 113B of the watercraft control device 113 of the watercraft 11 determines whether or not the distance between the input device 12 and the watercraft 11 calculated in step S1G is greater than or equal to a "threshold value." In the example shown in FIG. 9, in step S1H, the processing unit 113B determines that the distance between the input device 12 and the watercraft 11 is greater than or equal to the "threshold value."

Subsequently, in step S11, the communication unit 116 of the watercraft 11 transmits information indicating that the distance between the input device 12 and the watercraft 11 is greater than or equal to the "threshold value" and the communication unit 12A of the input device 12 receives the information.

Subsequently, in step S1J, the notification unit 12D of the input device 12 provides a notification for the remote watercraft maneuverer using the input device 12. Therefore, the remote watercraft maneuverer can ascertain that there is a potential risk of disabled remote watercraft maneuvering if the watercraft 11 continuously moves forward.

Moreover, in step S1K, the watercraft control device 113 switches the mode from the remote watercraft maneuvering mode to the fixed-point holding mode in a state in which the manipulation unit 112 of the watercraft 11 does not need to receive any input manipulation and the manipulation unit 12C of the input device 12 does not need to receive any input manipulation.

Specifically, in step S1K, the watercraft control device 113 operates the actuator 111 on the basis of a deviation between a position (an actual watercraft position) of the watercraft 11 detected by the watercraft position detection unit 114 and a target position (a target watercraft position) of the watercraft 11 in a state in which the manipulation unit 112 of the watercraft 11 does not need to receive any input manipulation and the manipulation unit 12C of the input device 12 does not need to receive any input manipulation. That is, the watercraft control device 113 executes fixed-point holding control for holding the position (the actual watercraft position) of the watercraft 11 detected by the watercraft position detection unit 114 at the target watercraft position.

For example, at the time when the processing unit 113B of the watercraft control device 113 of the watercraft 11 determines that the distance between the input device 12 and the watercraft 11 is greater than or equal to the "threshold value," the position of the watercraft 11 detected by the watercraft position detection unit 114 or the like is used as the target watercraft position in the fixed-point holding mode.

Because a notification for the remote watercraft maneuverer is provided in step S1J, the remote watercraft maneuverer can easily ascertain that the mode has been automatically switched from the remote watercraft maneuvering mode to the fixed-point holding mode.

### <Eighth Embodiment>

Hereinafter, an eighth embodiment of a remote watercraft maneuvering system, a watercraft control device, an input device, a remote watercraft maneuvering method, and a program of the present invention will be described.

A configuration of a remote watercraft maneuvering system 1 of the eighth embodiment is similar to that of the remote watercraft maneuvering system 1 of the second embodiment described above, except for points to be described below. Therefore, it is possible to achieve an effect of the remote watercraft maneuvering system 1 of the eighth embodiment similar to that of the remote watercraft maneuvering system 1 of the second embodiment described above, except for points to be described below.

A configuration of the remote watercraft maneuvering system 1 of the eighth embodiment is similar to that of the remote watercraft maneuvering system 1 of the second embodiment shown in FIG. 4.

In the remote watercraft maneuvering system 1 of the eighth embodiment, a watercraft control device 113 of a watercraft 11 has a fixed-point holding mode. In the fixed-point holding mode of the watercraft control device 113, the watercraft control device 113 operates an actuator 111 on the basis of a deviation between a position (an actual watercraft position) of the watercraft 11 detected by a watercraft position detection unit 114 and a target position (a target watercraft position) of the watercraft 11 in a state in which a manipulation unit 112 of the watercraft 11 does not need to receive any input manipulation and a manipulation unit 12C of an input device 12 does not need to receive any input manipulation.

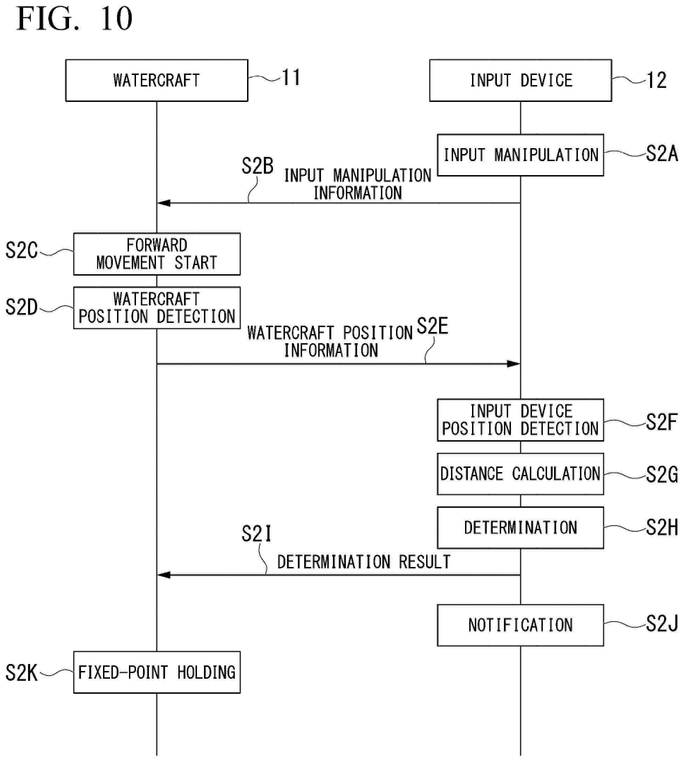

FIG. 10 is a sequence diagram for describing an example of a process executed in the remote watercraft maneuvering system 1 of the eighth embodiment in a remote watercraft maneuvering mode of the watercraft control device 113 or the like.

In the example shown in FIG. 10, in step S2A, the manipulation unit 12C of the input device 12 receives, for example, an input manipulation of a remote watercraft maneuverer for performing the forward movement of the watercraft 11.

Subsequently, in step S2B, a communication unit 12A of the input device 12 transmits information indicating the input manipulation for performing the forward movement of the watercraft 11 received by the manipulation unit 12C in step S2A and a communication unit 116 of the watercraft 11 receives the information.

Subsequently, in step S2C, the watercraft control device 113 of the watercraft 11 operates the actuator 111 in accordance with the input manipulation for performing the forward movement of the watercraft 11 received by the manipulation unit 12C of the input device 12 and the forward movement of the watercraft 11 starts.

In step S2D, the watercraft position detection unit 114 of the watercraft 11 detects a position of the watercraft 11. Specifically, the detection of the position of the watercraft 11 by the watercraft position detection unit 114 is repeatedly executed in the remote watercraft maneuvering mode and the fixed-point holding mode of the watercraft control device 113.

Subsequently, in step S2E, the communication unit 116 of the watercraft 11 transmits information indicating the position of the watercraft 11 detected in step S2D, and the communication unit 12A of the input device 12 receives the information.

In step S2F, the input device position detection unit 12B of the input device 12 detects a position of the input device 12. Specifically, the detection of the position of the input device 12 by the input device position detection unit 12B is repeatedly executed in the remote watercraft maneuvering mode and the fixed-point holding mode of the watercraft control device 113.

Subsequently, in step S2G, a processing unit 12E of the input device 12 calculates a distance between the input device 12 and the watercraft 11 on the basis of the position of the input device 12 detected in step S2F and the position of the watercraft 11 detected in step S2D.

Subsequently, in step S2H, the processing unit 12E of the input device 12 determines whether or not the distance between the input device 12 and the watercraft 11 calculated in step S2G is greater than or equal to a "threshold value." In the example shown in FIG. 10, in step S2H, the processing unit 12E determines that the distance between the input device 12 and the watercraft 11 is greater than or equal to the "threshold value."

Subsequently, in step S2I, the communication unit 12A of the input device 12 transmits a result of the determination made in step S2H and the communication unit 116 of the watercraft 11 receives the determination result.

Moreover, in step S2J, the notification unit 12D of the input device 12 provides a notification for the remote watercraft maneuverer using the input device 12. Therefore, the remote watercraft maneuverer can ascertain that there is a potential risk of disabled remote watercraft maneuvering if the watercraft 11 continuously moves forward.

In step S2K, the watercraft control device 113 switches the mode from the remote watercraft maneuvering mode to the fixed-point holding mode in a state in which the manipulation unit 112 of the watercraft 11 does not need to receive any input manipulation and the manipulation unit 12C of the input device 12 does not need to receive any input manipulation on the basis of the determination result transmitted from the input device 12 in step S2I.

Specifically, in step S2K, the watercraft control device 113 operates the actuator 111 on the basis of a deviation between a position (an actual watercraft position) of the watercraft 11 detected by the watercraft position detection unit 114 and a target position (a target watercraft position) of the watercraft 11 in a state in which the manipulation unit 112 of the watercraft 11 does not need to receive any input manipulation and the manipulation unit 12C of the input device 12 does not need to receive any input manipulation. That is, the watercraft control device 113 executes fixed-point holding control for holding the position (the actual watercraft position) of the watercraft 11 detected by the watercraft position detection unit 114 at the target watercraft position.

For example, at the time when the processing unit 12E of the input device 12 determines that the distance between the input device 12 and the watercraft 11 is greater than or equal to the "threshold value," the position of the watercraft 11 detected by the watercraft position detection unit 114 or the like is used as the target watercraft position in the fixed-point holding mode.

Because the notification for the remote watercraft maneuverer is provided in step S2J, the remote watercraft maneuverer can easily ascertain that the mode has been automatically switched from the remote watercraft maneuvering mode to the fixed-point holding mode.

### <Ninth Embodiment>

Hereinafter, a ninth embodiment of a remote watercraft maneuvering system, a watercraft control device, an input device, a remote watercraft maneuvering method, and a program of the present invention will be described.

A configuration of a remote watercraft maneuvering system 1 of the ninth embodiment is similar to that of the remote watercraft maneuvering system 1 of the first embodiment described above, except for points to be described below. Therefore, it is possible to achieve an effect of the remote watercraft maneuvering system 1 of the ninth embodiment similar to that of the remote watercraft maneuvering system 1 of the first embodiment described above, except for points to be described below.

A configuration of the remote watercraft maneuvering system 1 of the ninth embodiment is similar to that of the remote watercraft maneuvering system 1 of the first embodiment shown in FIG. 1.

In the remote watercraft maneuvering system 1 of the ninth embodiment, a watercraft control device 113 of a watercraft 11 has an orientation holding mode.

In a first example of the remote watercraft maneuvering system 1 of the ninth embodiment, in the orientation holding mode of the watercraft control device 113, the watercraft control device 113 holds a bow orientation of the watercraft 11 in a direction in which an intensity of radio waves received by a communication unit 116 of the watercraft 11 from an input device 12 has a maximum value in a state in which a manipulation unit 112 of the watercraft 11 does not need to receive any input manipulation and a manipulation unit 12C of the input device 12 does not need to receive any input manipulation.

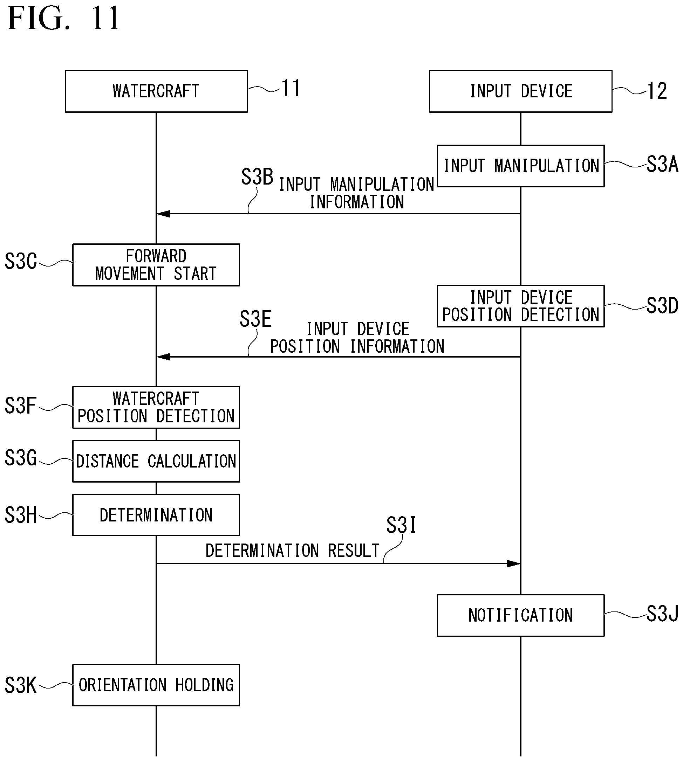

FIG. 11 is a sequence diagram for describing a first example of a process executed in the remote watercraft maneuvering system 1 of the ninth embodiment in a remote watercraft maneuvering mode of the watercraft control device 113 or the like.

In the example shown in FIG. 11, in step S3A, the manipulation unit 12C of the input device 12 receives, for example, an input manipulation of the remote watercraft maneuverer for performing the forward movement of the watercraft 11.

Subsequently, in step S3B, a communication unit 12A of the input device 12 transmits information indicating the input manipulation for performing the forward movement of the watercraft 11 received by the manipulation unit 12C in step S3A and the communication unit 116 of the watercraft 11 receives the information.

Subsequently, in step S3C, the watercraft control device 113 of the watercraft 11 operates an actuator 111 in accordance with the input manipulation for performing the forward movement of the watercraft 11 received by the manipulation unit 12C of the input device 12 and the forward movement of the watercraft 11 starts.

In step S3D, an input device position detection unit 12B of the input device 12 detects a position of the input device 12. Specifically, the detection of the position of the input device 12 by the input device position detection unit 12B is repeatedly executed in the remote watercraft maneuvering mode and the orientation holding mode of the watercraft control device 113.

Subsequently, in step S3E, the communication unit 12A of the input device 12 transmits information indicating the position of the input device 12 detected in step S3D, and the communication unit 116 of the watercraft 11 receives the information.

In step S3F, a watercraft position detection unit 114 of the watercraft 11 detects a position (an actual watercraft position) of the watercraft 11. Specifically, the detection of the position of the watercraft 11 by the watercraft position detection unit 114 is repeatedly executed in the remote watercraft maneuvering mode and the orientation holding mode of the watercraft control device 113.

Subsequently, in step S3G, a processing unit 113B of the watercraft control device 113 of the watercraft 11 calculates a distance between the input device 12 and the watercraft 11 on the basis of the position of the input device 12 detected in step S3D and the position of the watercraft 11 detected in step S1F.

Subsequently, in step S3H, the processing unit 113B of the watercraft control device 113 of the watercraft 11 determines whether or not the distance between the input device 12 and the watercraft 11 calculated in step S3G is greater than or equal to a "threshold value." In the example shown in FIG. 11, in step S3H, the processing unit 113B determines that the distance between the input device 12 and the watercraft 11 is greater than or equal to the "threshold value."

Subsequently, in step S3I, the communication unit 116 of the watercraft 11 transmits information indicating that the distance between the input device 12 and the watercraft 11 is greater than or equal to the "threshold value" and the communication unit 12A of the input device 12 receives the information.

Subsequently, in step S3J, a notification unit 12D of the input device 12 provides a notification for the remote watercraft maneuverer using the input device 12. Therefore, the remote watercraft maneuverer can ascertain that there is a potential risk of disabled remote watercraft maneuvering if the watercraft 11 continuously moves forward.

Moreover, in step S3K, the watercraft control device 113 switches the mode from the remote watercraft maneuvering mode to the orientation holding mode in a state in which the manipulation unit 112 of the watercraft 11 does not need to receive any input manipulation and the manipulation unit 12C of the input device 12 does not need to receive any input manipulation.

Specifically, in step S3K, the watercraft control device 113 executes orientation holding control for holding a bow orientation of the watercraft 11 in a direction in which an intensity of radio waves received by the communication unit 116 of the watercraft 11 from the input device 12 has a maximum value in a state in which a manipulation unit 112 of the watercraft 11 does not need to receive any input manipulation and a manipulation unit 12C of an input device 12 does not need to receive any input manipulation.

Because the notification for the remote watercraft maneuverer has been provided in step S3J, the remote watercraft maneuverer can easily ascertain that the mode has been automatically switched from the remote watercraft maneuvering mode to the orientation holding mode.

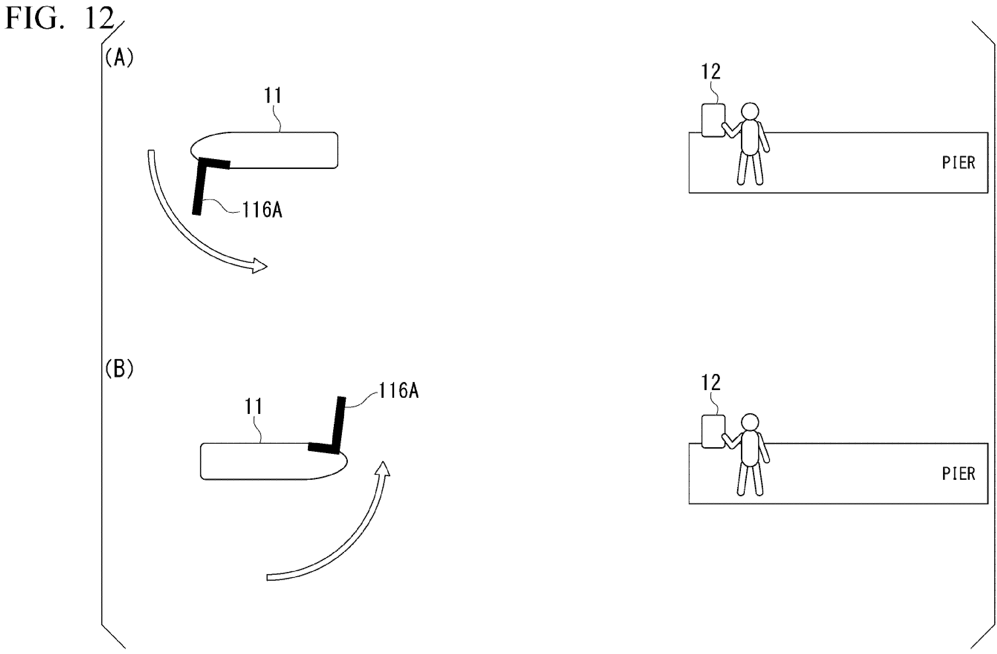

FIG. 12 is an explanatory diagram showing a second example of a process executed in the remote watercraft maneuvering system 1 of the ninth embodiment in the orientation holding mode of the watercraft control device 113. Specifically, FIG. 12(A) shows a state in which the distance between the input device 12 and the watercraft 11 is greater than or equal to the "threshold value" in the remote watercraft maneuvering mode of the watercraft control device 113 and FIG. 12(B) shows a state of the watercraft 11 and the like in the orientation holding mode of the watercraft control device 113.

In the example shown in FIG. 12, a communication antenna 116A of the communication unit 116 of the watercraft 11 is arranged on the bow of the watercraft 11.

In the example shown in FIG. 12, as shown in FIG. 12(A), when the distance between the input device 12 and the watercraft 11 is greater than or equal to the "threshold value" in the remote watercraft maneuvering mode of the watercraft control device 113, the watercraft control device 113 switches the mode from the remote watercraft maneuvering mode to the orientation holding mode in a state in which the manipulation unit 112 of the watercraft 11 does not need to receive any input manipulation and the manipulation unit 12C of the input device 12 does not need to receive any input manipulation.

Specifically, as shown in FIG. 12(A), when the mode is switched from the remote watercraft maneuvering mode to the orientation holding mode, the stern of the watercraft 11 moving forward in a direction away from the input device 12 (or in the left direction of FIG. 12) is directed to the input device 12 (in the right direction of FIG. 12).

In a second example of the remote watercraft maneuvering system 1 of the ninth embodiment shown in FIG. 12, in the orientation holding mode of the watercraft control device 113, the watercraft control device 113 holds the bow orientation of the watercraft 11 so that the bow of the watercraft 11 is directed to the input device 12 in a state in which the manipulation unit 112 of the watercraft 11 does not need to receive any input manipulation and the manipulation unit 12C of the input device 12 does not need to receive any input manipulation.

Therefore, as shown in FIG. 12(B), the bow of the watercraft 11 on which the communication antenna 116Ais arranged is directed to the input device 12. As a result, as compared with the case shown in FIG. 12(A), the distance between the communication antenna 116A of the communication unit 116 of the watercraft 11 and the input device 12 is short and a shield (for example, the hull of the watercraft 11, the passenger, or the like) is absent between the communication antenna 116A and the input device 12, and the intensity of radio waves received by the communication unit 116 of the watercraft 11 from the input device 12 can be improved.

<Tenth Embodiment>

Hereinafter, a tenth embodiment of a remote watercraft maneuvering system, a watercraft control device, an input device, a remote watercraft maneuvering method, and a program of the present invention will be described.

A configuration of a remote watercraft maneuvering system 1 of the tenth embodiment is similar to that of the remote watercraft maneuvering system 1 of the second embodiment described above, except for points to be described below. Therefore, it is possible to achieve an effect of the remote watercraft maneuvering system 1 of the tenth embodiment similar to that of the remote watercraft maneuvering system 1 of the second embodiment described above, except for points to be described below.

A configuration of the remote watercraft maneuvering system 1 of the tenth embodiment is similar to that of the remote watercraft maneuvering system 1 of the second embodiment shown in FIG. 4,

In the remote watercraft maneuvering system 1 of the tenth embodiment, a watercraft control device 113 of a watercraft 11 has an orientation holding mode.

In a first example of the remote watercraft maneuvering system 1 of the tenth embodiment, in the orientation holding mode of the watercraft control device 113, the watercraft control device 113 holds a bow orientation of the watercraft 11 in a direction in which an intensity of radio waves received by a communication unit 116 of the watercraft 11 from an input device 12 has a maximum value in a state in which a manipulation unit 112 of the watercraft 11 does not need to receive any input manipulation and a manipulation unit 12C of the input device 12 does not need to receive any input manipulation.

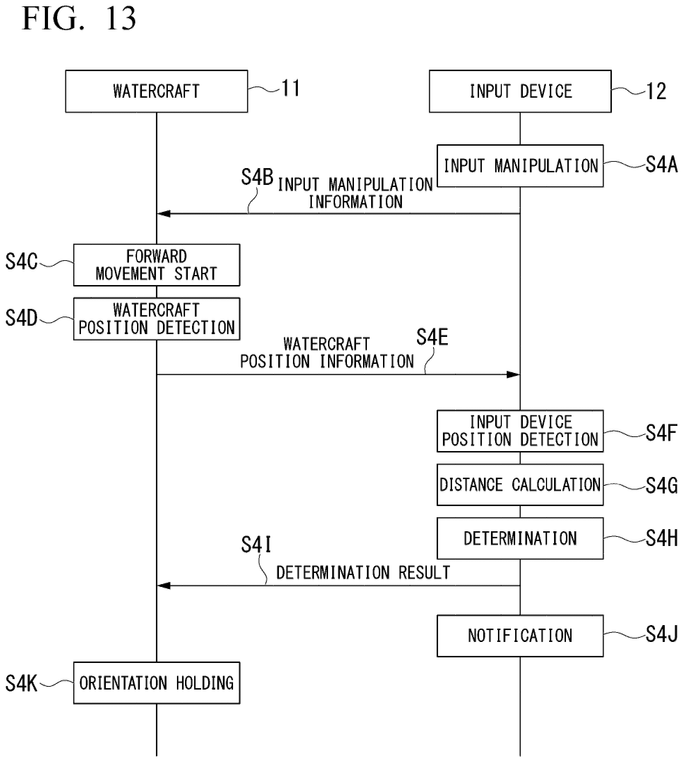

FIG. 13 is a sequence diagram for describing a first example of a process executed in the remote watercraft maneuvering system 1 of the tenth embodiment in a remote watercraft maneuvering mode of the watercraft control device 113 or the like.

In the example shown in FIG. 13, in step S4A, the manipulation unit 12C of the input device 12 receives, for example, an input manipulation of a remote watercraft maneuverer for performing the forward movement of the watercraft 11.

Subsequently, in step S4B, a communication unit 12A of the input device 12 transmits information indicating the input manipulation for performing the forward movement of the watercraft 11 received by the manipulation unit 12C in step S4A and the communication unit 116 of the watercraft 11 receives the information.

Subsequently, in step S4C, the watercraft control device 113 of the watercraft 11 operates an actuator 111 in accordance with the input manipulation for performing the forward movement of the watercraft 11 received by the manipulation unit 12C of the input device 12 and the forward movement of the watercraft 11 starts.

In step S4D, the watercraft position detection unit 114 of the watercraft 11 detects a position of the watercraft 11. Specifically, the detection of the position of the watercraft 11 by the watercraft position detection unit 114 is repeatedly executed in the remote watercraft maneuvering mode and the orientation holding mode of the watercraft control device 113.

Subsequently, in step S4E, the communication unit 116 of the watercraft 11 transmits information indicating the position of the watercraft 11 detected in step S4D, and the communication unit 12A of the input device 12 receives the information.

In step S4F, an input device position detection unit 12B of the input device 12 detects a position of the input device 12. Specifically, the detection of the position of the input device 12 by the input device position detection unit 12B is repeatedly executed in the remote watercraft maneuvering mode and the orientation holding mode of the watercraft control device 113.

Subsequently, in step S4G, a processing unit 12E of the input device 12 calculates the distance between the input device 12 and the watercraft 11 on the basis of the position of the input device 12 detected in step S4F and the position of the watercraft 11 detected in step S4D.

Subsequently, in step S4H, the processing unit 12E of the input device 12 determines whether or not a distance between the input device 12 and the watercraft 11 calculated in step S4G is greater than or equal to a "threshold value." In the example shown in FIG. 13, in step S4H, the processing unit 12E determines that the distance between the input device 12 and the watercraft 11 is greater than or equal to the "threshold value."

Subsequently, in step S4I, the communication unit 12A of the input device 12 transmits a result of the determination made in step S4H and the communication unit 116 of the watercraft 11 receives the determination result.

Moreover, in step S4J, a notification unit 12D of the input device 12 provides a notification for the remote watercraft maneuverer using the input device 12. Therefore, the remote watercraft maneuverer can ascertain that there is a potential risk of disabled remote watercraft maneuvering if the watercraft 11 continuously moves forward.

Moreover, in step S4K, the watercraft control device 113 switches the mode from the remote watercraft maneuvering mode to the orientation holding mode in a state in which the manipulation unit 112 of the watercraft 11 does not need to receive any input manipulation and the manipulation unit 12C of the input device 12 does not need to receive any input manipulation.

Specifically, in step S4K, the watercraft control device 113 executes orientation holding control for holding a bow orientation of the watercraft 11 in a direction in which an intensity of radio waves received by the communication unit 116 of the watercraft 11 from the input device 12 has a maximum value in a state in which the manipulation unit 112 of the watercraft 11 does not need to receive any input manipulation and the manipulation unit 12C of the input device 12 does not need to receive any input manipulation.

Because the notification for the remote watercraft maneuverer has been provided in step S4J, the remote watercraft maneuverer can easily ascertain that the mode has been automatically switched from the remote watercraft maneuvering mode to the orientation holding mode.

In the second example of the process executed by the remote watercraft maneuvering system 1 of the tenth embodiment in the orientation holding mode of the watercraft control device 113, a process similar to that shown in FIG. 12 is executed.

Specifically, in the second example of the remote watercraft maneuvering system 1 of the tenth embodiment, the communication antenna 116A of the communication unit 116 of the watercraft 11 is arranged on the bow of the watercraft 11. When a distance between the input device 12 and the watercraft 11 is greater than or equal to a "threshold value" in the remote watercraft maneuvering mode of the watercraft control device 113, the watercraft control device 113 switches the mode from the remote watercraft maneuvering mode to the orientation holding mode in a state in which the manipulation unit 112 of the watercraft 11 does not need to receive any input manipulation and the manipulation unit 12C of an input device 12 does not need to receive any input manipulation. In the orientation holding mode of the watercraft control device 113, the watercraft control device 113 holds a bow orientation of the watercraft 11 so that the bow of the watercraft 11 is directed to the input device 12 in a state in which the manipulation unit 112 of the watercraft 11 does not need to receive any input manipulation and the manipulation unit 12C of the input device 12 does not need to receive any input manipulation.

### <Eleventh Embodiment>

Hereinafter, an eleventh embodiment of a remote watercraft maneuvering system, a watercraft control device, an input device, a remote watercraft maneuvering method, and a program of the present invention will be described.

A configuration of a watercraft 11 of the eleventh embodiment is similar to that of the watercraft 11 of the tenth embodiment described above, except for points to be described below. Therefore, it is possible to achieve an effect of the remote watercraft maneuvering system 1 of the eleventh embodiment similar to that of any one of the remote watercraft maneuvering systems 1 of the first to tenth embodiments described above, except for points to be described below.

Although the watercrafts 11 of the first to tenth embodiments are PWCs as described above, the watercraft 11 of the eleventh embodiment is, for example, a watercraft other than a PWC like any of a watercraft having a function similar to a basic function of a sports boat described in FIG. 1 of Japanese Unexamined Patent Application, First Publication No. 2020-019321, a watercraft not equipped with a jet propulsion machine, (e.g., a watercraft equipped with an outboard motor, a watercraft equipped with an inboard/outboard motor or an inboard engine, a large watercraft equipped with a side thruster, or the like described in Japanese Patent No. 6198192, Japanese Unexamined Patent Application, First Publication No. 2007-22284, or the like), and the like.

Although modes for carrying out the present invention have been described using embodiments, the present invention is not limited to the embodiments and various modifications and substitutions can also be made without departing from the scope and spirit of the present invention. The configurations described in the above-described embodiments and examples may be combined.

Also, all or some of the functions of the parts provided in the remote watercraft maneuvering system 1 according to the above-described embodiment may be implemented by recording a program for implementing the functions on a computer-readable recording medium and causing a computer system to read and execute the program recorded on the recording medium. Also, the "computer system" described here is assumed to include an operating system (OS) and hardware such as peripheral devices.

Moreover, the "computer-readable recording medium" refers to a flexible disk, a magneto-optical disc, a read-only memory (ROM), a portable medium such as a compact disc (CD)-ROM, or a storage unit such as a hard disk embedded in the computer system. Further, the "computer-readable recording medium" may include a computer-readable recording medium for dynamically retaining the program for a short time period as in a communication line when the program is transmitted via a network such as the Internet or a communication circuit such as a telephone circuit and a computer-readable recording medium for retaining the program for a given time period as in a volatile memory inside the computer system serving as a server or a client when the program is transmitted. Moreover, the above-described program may be a program for implementing some of the above-described functions. Furthermore, the above-described program may be a program capable of implementing the above-described function in combination with a program already recorded on the computer system.

### Reference Signs List

1 Remote watercraft maneuvering system
11 Watercraft
111 Actuator
111A Engine
111B Jet propulsion device
111B1 Nozzle
111B2 Bucket
112 Manipulation unit
112A Throttle manipulation unit
112B Shift manipulation unit
112C Steering unit
113 Watercraft control device
113A Watercraft control unit
113B Processing unit
114 Watercraft position detection unit
115 Bow orientation detection unit
116 Communication unit
116A Communication antenna
12 Input device
12A Communication unit
12B Input device position detection unit
12C Manipulation unit
12D Notification unit
12E Processing unit

## Claims

1. A remote watercraft maneuvering system including a watercraft and an input device configured to receive an input manipulation for remotely manipulating the watercraft,
wherein the watercraft comprises
an actuator having a function of generating a propulsion force of the watercraft and a function of causing the watercraft to generate a moment;
a manipulation unit of the watercraft configured to receive an input manipulation for operating the actuator;
a watercraft control device having a function of operating the actuator in accordance with an input manipulation received by the manipulation unit of the watercraft;
a watercraft position detection unit configured to detect a position of the watercraft; and
a communication unit of the watercraft configured to communicate with the input device,
wherein the input device comprises
a communication unit of the input device configured to communicate with the watercraft;
an input device position detection unit configured to detect a position of the input device;
a manipulation unit of the input device configured to receive an input manipulation for operating the actuator; and
a notification unit configured to provide a notification for a remote watercraft maneuverer using the input device,
wherein the watercraft control device has
a normal watercraft maneuvering mode in which the actuator is operated in accordance with the input manipulation received by the manipulation unit of the watercraft; and
a remote watercraft maneuvering mode in which the manipulation unit of the watercraft does not need to receive the input manipulation and the actuator is operated in accordance with the input manipulation received by the manipulation unit of the input device,
wherein, in the remote watercraft maneuvering mode,
the communication unit of the watercraft receives information indicating the position of the input device detected by the input device position detection unit from the input device,
the watercraft control device calculates a distance between the input device and the watercraft on the basis of the position of the input device detected by the input device position detection unit and the position of the watercraft detected by the watercraft position detection unit, and
the communication unit of the watercraft transmits information indicating that the distance between the input device and the watercraft is greater than or equal to a threshold value to the input device and the notification unit provides a notification for a remote watercraft maneuverer using the input device when the distance between the input device and the watercraft is greater than or equal to the threshold value, and
wherein the threshold value is smaller than a maximum value of the distance between the input device and the watercraft when communication between the communication unit of the input device and the communication unit of the watercraft is possible.

2. The remote watercraft maneuvering system according to claim 1, wherein the watercraft control device changes a magnitude of the threshold value in accordance with an intensity of radio waves received by the communication unit of the watercraft from the input device.

3. The remote watercraft maneuvering system according to claim 2, wherein the watercraft control device increases the threshold value as the intensity of the radio waves received by the communication unit of the watercraft from the input device increases.

4. A watercraft control device provided in a watercraft to be remotely manipulated according to an input manipulation received by an input device,
wherein the watercraft comprises
an actuator having a function of generating a propulsion force of the watercraft and a function of causing the watercraft to generate a moment;
a manipulation unit of the watercraft configured to receive an input manipulation for operating the actuator;
a watercraft position detection unit configured to detect a position of the watercraft; and
a communication unit of the watercraft configured to communicate with the input device,
wherein the watercraft control device has a function of operating the actuator in accordance with an input manipulation received by the manipulation unit of the watercraft,
wherein the input device comprises
a communication unit of the input device configured to communicate with the watercraft;
an input device position detection unit configured to detect a position of the input device;
a manipulation unit of the input device configured to receive an input manipulation for operating the actuator; and
a notification unit configured to provide a notification for a remote watercraft maneuverer using the input device,
wherein the watercraft control device has
a normal watercraft maneuvering mode in which the actuator is operated in accordance with the input manipulation received by the manipulation unit of the watercraft; and
a remote watercraft maneuvering mode in which the manipulation unit of the watercraft does not need to receive the input manipulation and the actuator is operated in accordance with the input manipulation received by the manipulation unit of the input device,
wherein, in the remote watercraft maneuvering mode,
the communication unit of the watercraft receives information indicating the position of the input device detected by the input device position detection unit from the input device,
the watercraft control device calculates a distance between the input device and the watercraft on the basis of the position of the input device detected by the input device position detection unit and the position of the watercraft detected by the watercraft position detection unit, and
the communication unit of the watercraft transmits information indicating that the distance between the input device and the watercraft is greater than or equal to a threshold value to the input device and the notification unit provides a notification for a remote watercraft maneuverer using the input device when the distance between the input device and the watercraft is greater than or equal to the threshold value, and
wherein the threshold value is smaller than a maximum value of the distance between the input device and the watercraft when communication between the communication unit of the input device and the communication unit of the watercraft is possible.

5. A remote watercraft maneuvering method of remotely manipulating a watercraft according to an input manipulation received by an input device,
wherein the watercraft comprises
an actuator having a function of generating a propulsion force of the watercraft and a function of causing the watercraft to generate a moment;
a manipulation unit of the watercraft configured to receive an input manipulation for operating the actuator;
a watercraft control device having a function of operating the actuator in accordance with an input manipulation received by the manipulation unit of the watercraft;
a watercraft position detection unit configured to detect a position of the watercraft; and
a communication unit of the watercraft configured to communicate with the input device,
wherein the input device comprises
a communication unit of the input device configured to communicate with the watercraft;
an input device position detection unit configured to detect a position of the input device;
a manipulation unit of the input device configured to receive an input manipulation for operating the actuator; and
a notification unit configured to provide a notification for a remote watercraft maneuverer using the input device,
wherein the watercraft control device has
a normal watercraft maneuvering mode in which the actuator is operated in accordance with the input manipulation received by the manipulation unit of the watercraft; and
a remote watercraft maneuvering mode in which the manipulation unit of the watercraft does not need to receive the input manipulation and the actuator is operated in accordance with the input manipulation received by the manipulation unit of the input device,
wherein the remote watercraft maneuvering method comprises
a first step in which the communication unit of the watercraft receives information indicating the position of the input device detected by the input device position detection unit from the input device in the remote watercraft maneuvering mode;
a second step in which the watercraft control device calculates a distance between the input device and the watercraft on the basis of the position of the input device detected by the input device position detection unit and the position of the watercraft detected by the watercraft position detection unit in the remote watercraft maneuvering mode; and
a third step in which the communication unit of the watercraft transmits information indicating that the distance between the input device and the watercraft is greater than or equal to a threshold value to the input device and the notification unit provides a notification for a remote watercraft maneuverer using the input device when the distance between the input device and the watercraft is greater than or equal to the threshold value in the remote watercraft maneuvering mode, and
wherein the threshold value is smaller than a maximum value of the distance between the input device and the watercraft when communication between the communication unit of the input device and the communication unit of the watercraft is possible.

6. A program for causing a computer constituting a watercraft control device provided in a watercraft to be remotely manipulated according to an input manipulation received by an input device to execute a normal watercraft maneuvering step and a remote watercraft maneuvering step,
wherein the watercraft comprises
an actuator having a function of generating a propulsion force of the watercraft and a function of causing the watercraft to generate a moment;
a manipulation unit of the watercraft configured to receive an input manipulation for operating the actuator;
a watercraft position detection unit configured to detect a position of the watercraft; and
a communication unit of the watercraft configured to communicate with the input device,
wherein the input device comprises
a communication unit of the input device configured to communicate with the watercraft;
an input device position detection unit configured to detect a position of the input device;
a manipulation unit of the input device configured to receive an input manipulation for operating the actuator; and
a notification unit configured to provide a notification for a remote watercraft maneuverer using the input device,
wherein the actuator is operated in accordance with the input manipulation received by the manipulation unit of the watercraft in the normal watercraft maneuvering step,
wherein the manipulation unit of the watercraft does not need to receive the input manipulation and the actuator is operated in accordance with the input manipulation received by the manipulation unit of the input device in the remote watercraft maneuvering step,
wherein the remote watercraft maneuvering step comprises a distance calculation step in which a distance between the input device and the watercraft is calculated on the basis of the position of the input device detected by the input device position detection unit and the position of the watercraft detected by the watercraft position detection unit,
wherein, while the remote watercraft maneuvering step is being executed,
the communication unit of the watercraft receives information indicating the position of the input device detected by the input device position detection unit from the input device, and
the communication unit of the watercraft transmits information indicating that the distance between the input device and the watercraft is greater than or equal to a threshold value to the input device and the notification unit provides a notification for a remote watercraft maneuverer using the input device when the distance between the input device and the watercraft is greater than or equal to the threshold value, and
wherein the threshold value is smaller than a maximum value of the distance between the input device and the watercraft when communication between the communication unit of the input device and the communication unit of the watercraft is possible.

7. A remote watercraft maneuvering system including a watercraft and an input device configured to receive an input manipulation for remotely manipulating the watercraft,
wherein the watercraft comprises
an actuator having a function of generating a propulsion force of the watercraft and a function of causing the watercraft to generate a moment;
a manipulation unit of the watercraft configured to receive an input manipulation for operating the actuator;
a watercraft control device having a function of operating the actuator in accordance with an input manipulation received by the manipulation unit of the watercraft;
a watercraft position detection unit configured to detect a position of the watercraft; and
a communication unit of the watercraft configured to communicate with the input device,
wherein the input device comprises
a communication unit of the input device configured to communicate with the watercraft;
an input device position detection unit configured to detect a position of the input device;
a manipulation unit of the input device configured to receive an input manipulation for operating the actuator;
a notification unit configured to provide a notification for a remote watercraft maneuverer using the input device; and
a processing unit,
wherein the watercraft control device has
a normal watercraft maneuvering mode in which the actuator is operated in accordance with the input manipulation received by the manipulation unit of the watercraft; and
a remote watercraft maneuvering mode in which the manipulation unit of the watercraft does not need to receive the input manipulation and the actuator is operated in accordance with the input manipulation received by the manipulation unit of the input device,
wherein, in the remote watercraft maneuvering mode,
the communication unit of the input device receives information indicating the position of the watercraft detected by the watercraft position detection unit from the watercraft,
the processing unit calculates a distance between the input device and the watercraft on the basis of the position of the input device detected by the input device position detection unit and the position of the watercraft detected by the watercraft position detection unit, and
the notification unit provides a notification for a remote watercraft maneuverer using the input device when the distance between the input device and the watercraft is greater than or equal to a threshold value, and
wherein the threshold value is smaller than a maximum value of the distance between the input device and the watercraft when communication between the communication unit of the input device and the communication unit of the watercraft is possible.

8. The remote watercraft maneuvering system according to claim 1 or 7,
wherein the watercraft control device has an auto return mode in which the manipulation unit of the watercraft does not need to receive the input manipulation, the manipulation unit of the input device does not need to receive the input manipulation, and the actuator is operated so that the watercraft approaches the input device, and
wherein the watercraft control device switches the mode from the remote watercraft maneuvering mode to the auto return mode in a state in which the manipulation unit of the watercraft does not need to receive the input manipulation and the manipulation unit of the input device does not need to receive the input manipulation when the distance between the input device and the watercraft is greater than or equal to the threshold value.

9. The remote watercraft maneuvering system according to claim 7, wherein the processing unit changes a magnitude of the threshold value in accordance with an intensity of radio waves received by the communication unit of the input device from the watercraft.

10. The remote watercraft maneuvering system according to claim 9, wherein the processing unit increases the threshold value as the intensity of the radio waves received by the communication unit of the input device from the watercraft increases.

11. The remote watercraft maneuvering system according to claim 1 or 7,
wherein the watercraft control device has a fixed-point holding mode in which the manipulation unit of the watercraft does not need to receive the input manipulation, the manipulation unit of the input device does not need to receive the input manipulation, and the actuator is operated on the basis of a deviation between an actual watercraft position that is a position of the watercraft detected by the watercraft position detection unit and a target watercraft position that is a target position of the watercraft, and
wherein the watercraft control device switches the mode from the remote watercraft maneuvering mode to the fixed-point holding mode in a state in which the manipulation unit of the watercraft does not need to receive the input manipulation and the manipulation unit of the input device does not need to receive the input manipulation when the distance between the input device and the watercraft is greater than or equal to the threshold value.

12. The remote watercraft maneuvering system according to claim 1 or 7,
wherein the watercraft control device has an orientation holding mode in which the manipulation unit of the watercraft does not need to receive the input manipulation, the manipulation unit of the input device does not need to receive the input manipulation, and a bow orientation of the watercraft is held in a direction in which an intensity of radio waves received by the communication unit of the watercraft from the input device has a maximum value, and
wherein the watercraft control device switches the mode from the remote watercraft maneuvering mode to the orientation holding mode in a state in which the manipulation unit of the watercraft does not need to receive the input manipulation and the manipulation unit of the input device does not need to receive the input manipulation when the distance between the input device and the watercraft is greater than or equal to the threshold value.

13. The remote watercraft maneuvering system according to claim 1 or 7,
wherein the watercraft comprises a bow orientation detection unit configured to detect a bow orientation of the watercraft,
wherein the communication unit of the watercraft comprises a communication antenna configured to receive radio waves transmitted from the input device,
wherein the communication antenna is arranged on a bow of the watercraft,
wherein the watercraft control device has an orientation holding mode in which the manipulation unit of the watercraft does not need to receive the input manipulation, the manipulation unit of the input device does not need to receive the input manipulation, and the bow orientation of the watercraft is held so that the bow of the watercraft is directed to the input device, and
wherein the watercraft control device switches the mode from the remote watercraft maneuvering mode to the orientation holding mode in a state in which the manipulation unit of the watercraft does not need to receive the input manipulation and the manipulation unit of the input device does not need to receive the input manipulation when the distance between the input device and the watercraft is greater than or equal to the threshold value.

14. An input device for receiving an input manipulation for remotely manipulating a watercraft,
wherein the watercraft comprises
an actuator having a function of generating a propulsion force of the watercraft and a function of causing the watercraft to generate a moment;
a manipulation unit of the watercraft configured to receive an input manipulation for operating the actuator;
a watercraft control device having a function of operating the actuator in accordance with an input manipulation received by the manipulation unit of the watercraft;
a watercraft position detection unit configured to detect a position of the watercraft; and
a communication unit of the watercraft configured to communicate with the input device,
wherein the input device comprises
a communication unit of the input device configured to communicate with the watercraft;
an input device position detection unit configured to detect a position of the input device;
a manipulation unit of the input device configured to receive an input manipulation for operating the actuator;
a notification unit configured to provide a notification for a remote watercraft maneuverer using the input device; and
a processing unit,
wherein the watercraft control device has
a normal watercraft maneuvering mode in which the actuator is operated in accordance with the input manipulation received by the manipulation unit of the watercraft; and
a remote watercraft maneuvering mode in which the manipulation unit of the watercraft does not need to receive the input manipulation and the actuator is operated in accordance with the input manipulation received by the manipulation unit of the input device,
wherein, in the remote watercraft maneuvering mode,
the communication unit of the input device receives information indicating the position of the watercraft detected by the watercraft position detection unit from the watercraft,
the processing unit calculates a distance between the input device and the watercraft on the basis of the position of the input device detected by the input device position detection unit and the position of the watercraft detected by the watercraft position detection unit, and
the notification unit provides a notification for a remote watercraft maneuverer using the input device when the distance between the input device and the watercraft is greater than or equal to a threshold value, and
wherein the threshold value is smaller than a maximum value of the distance between the input device and the watercraft when communication between the communication unit of the input device and the communication unit of the watercraft is possible.

15. A remote watercraft maneuvering method of remotely manipulating a watercraft according to an input manipulation received by an input device,
wherein the watercraft comprises
an actuator having a function of generating a propulsion force of the watercraft and a function of causing the watercraft to generate a moment;
a manipulation unit of the watercraft configured to receive an input manipulation for operating the actuator;
a watercraft control device having a function of operating the actuator in accordance with an input manipulation received by the manipulation unit of the watercraft;
a watercraft position detection unit configured to detect a position of the watercraft; and
a communication unit of the watercraft configured to communicate with the input device,
wherein the input device comprises
a communication unit of the input device configured to communicate with the watercraft;
an input device position detection unit configured to detect a position of the input device;
a manipulation unit of the input device configured to receive an input manipulation for operating the actuator;
a notification unit configured to provide a notification for a remote watercraft maneuverer using the input device; and
a processing unit,
wherein the watercraft control device has
a normal watercraft maneuvering mode in which the actuator is operated in accordance with the input manipulation received by the manipulation unit of the watercraft; and
a remote watercraft maneuvering mode in which the manipulation unit of the watercraft does not need to receive the input manipulation and the actuator is operated in accordance with the input manipulation received by the manipulation unit of the input device,
wherein the remote watercraft maneuvering method comprises
a first step in which the communication unit of the input device receives information indicating the position of the watercraft detected by the watercraft position detection unit from the watercraft in the remote watercraft maneuvering mode;
a second step in which the processing unit calculates a distance between the input device and the watercraft on the basis of the position of the input device detected by the input device position detection unit and the position of the watercraft detected by the watercraft position detection unit in the remote watercraft maneuvering mode, and
a third step in which the notification unit provides a notification for a remote watercraft maneuverer using the input device when the distance between the input device and the watercraft is greater than or equal to a threshold value in the remote watercraft maneuvering mode, and
wherein the threshold value is smaller than a maximum value of the distance between the input device and the watercraft when communication between the communication unit of the input device and the communication unit of the watercraft is possible.

16. A program for causing a computer constituting an input device for receiving an input manipulation for remotely manipulating a watercraft to execute a remote watercraft maneuvering step,
wherein the watercraft comprises
an actuator having a function of generating a propulsion force of the watercraft and a function of causing the watercraft to generate a moment;
a manipulation unit of the watercraft configured to receive an input manipulation for operating the actuator;
a watercraft control device having a function of operating the actuator in accordance with an input manipulation received by the manipulation unit of the watercraft;
a watercraft position detection unit configured to detect a position of the watercraft; and
a communication unit of the watercraft configured to communicate with the input device,
wherein the input device comprises
a communication unit of the input device configured to communicate with the watercraft;
an input device position detection unit configured to detect a position of the input device;
a manipulation unit of the input device configured to receive an input manipulation for operating the actuator;
a notification unit configured to provide a notification for a remote watercraft maneuverer using the input device; and
a processing unit,
wherein the watercraft control device has
a normal watercraft maneuvering mode in which the actuator is operated in accordance with the input manipulation received by the manipulation unit of the watercraft; and
a remote watercraft maneuvering mode in which the manipulation unit of the watercraft does not need to receive the input manipulation and the actuator is operated in accordance with the input manipulation received by the manipulation unit of the input device,
wherein the remote watercraft maneuvering step is executed in the remote watercraft maneuvering mode,
wherein the remote watercraft maneuvering step comprises
a first step in which the communication unit of the input device receives information indicating the position of the watercraft detected by the watercraft position detection unit from the watercraft;
a second step in which the processing unit calculates a distance between the input device and the watercraft on the basis of the position of the input device detected by the input device position detection unit and the position of the watercraft detected by the watercraft position detection unit, and
a third step in which the notification unit provides a notification for a remote watercraft maneuverer using the input device when the distance between the input device and the watercraft is greater than or equal to a threshold value, and
wherein the threshold value is smaller than a maximum value of the distance between the input device and the watercraft when communication between the communication unit of the input device and the communication unit of the watercraft is possible.
